(19) Europäisches Patentamt
European Patent Office
Office européen des brevets

(11)  EP 2 387 734 B1

(12)  FASCICULE DE BREVET EUROPEEN

(45) Date de publication et mention
de la délivrance du brevet:
**11.11.2015  Bulletin 2015/46**

(21) Numéro de dépôt: **10701906.9**

(22) Date de dépôt: **11.01.2010**

(51) Int Cl.:
***G02C 7/06*** *(2006.01)*

(86) Numéro de dépôt international:
**PCT/IB2010/050086**

(87) Numéro de publication internationale:
**WO 2010/082152 (22.07.2010 Gazette 2010/29)**

(54) **PROCEDE DE DETERMINATION D'UNE NAPPE D'ASPHÉRISATION DESTINEE A UNE LENTILLE OPHTALMIQUE**

VERFAHREN ZUR BESTIMMUNG EINER ASPHÄRISIERUNGSSCHICHT FÜR EIN BRILLENGLAS

METHOD FOR DETERMINING AN ASPHERIZATION LAYER FOR AN OPHTHALMIC LENS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.01.2009  FR 0900127**

(43) Date de publication de la demande:
**23.11.2011  Bulletin 2011/47**

(73) Titulaire: **Essilor International (Compagnie Générale d'Optique) 94220 Charenton-le-Pont (FR)**

(72) Inventeurs:
• **GUILLOUX, Cyril**
  **F-94220 Charenton Le Pont (FR)**
• **MOUSSET, Soazic**
  **F-94220 Charenton Le Pont (FR)**

(74) Mandataire: **Cabinet Plasseraud 52, rue de la Victoire 75440 Paris Cedex 09 (FR)**

(56) Documents cités:
**EP-A- 1 950 601        EP-A1- 1 688 781
WO-A-02/059682        WO-A-2005/019905
WO-A1-2006/072683        WO-A2-00/72051
JP-A- 10 175 149        US-A1- 2003 048 408**

**Description**

La présente invention concerne un procédé de détermination d'une nappe d'asphérisation destinée à une lentille ophtalmique pour un porteur auquel une puissance et un astigmatisme ont été prescrits selon la revendication 1. Le procédé peut être appliqué indifféremment pour une lentille unifocale ou multifocale. L'invention s'étend en outre au procédé de détermination d'une lentille ophtalmique à partir d'une nappe d'asphérisation obtenue par le procédé.

Il peut être prescrit à un porteur une correction en puissance, positive ou négative. Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition représentative de l'incrément de puissance entre la vision de loin et la vision de près. Les lentilles ophtalmiques qui compensent la presbytie sont des lentilles multifocales, les plus adaptées étant les lentilles multifocales progressives.

Les lentilles ophtalmiques multifocales progressives sont maintenant bien connues. De telles lentilles sont utilisées pour compenser la presbytie et permettent au porteur des lunettes d'observer des objets dans une large gamme de distances, sans avoir à retirer ses lunettes. Les lentilles multifocales comportent typiquement une zone de vision de loin, située dans le haut de la lentille, une zone de vision de près, située dans le bas de la lentille, une zone intermédiaire reliant la zone de vision de près et la zone de vision de loin, ainsi qu'une méridienne principale de progression traversant ces trois zones.

Le document FR-A-2 699 294 décrit dans son préambule les différents éléments d'une telle lentille ophtalmique multifocale progressive, ainsi que les travaux menés par la demanderesse pour améliorer le confort des porteurs de telles lentilles. On se référera à ce document pour plus de précisions sur ces différents points.

La demanderesse a aussi proposé, par exemple dans les brevets US-A-5 270 745 ou USA-5 272 495 de faire varier la méridienne, et notamment son décentrement en un point de contrôle de la vision de près, en fonction de l'addition et de l'amétropie.

La demanderesse a encore proposé, pour mieux satisfaire les besoins visuels des presbytes et améliorer le confort des lentilles multifocales progressives, diverses améliorations (FR-A-2 683 642, FR-A-2 699 294, FR-A-2 704 327, WO 2005/019905).

EP1 688 781 divulgue le choix de lentilles progressives accolées.

Habituellement, les lentilles multifocales progressives comportent une surface multifocale asphérique, par exemple la surface opposée au porteur des lunettes, et une surface sphérique ou torique, dite surface de prescription. Cette surface sphérique ou torique permet d'adapter la lentille à l'amétropie de l'utilisateur, de sorte qu'une lentille multifocale n'est généralement définie que par sa surface asphérique. Comme il est bien connu, une telle surface asphérique est généralement définie par l'altitude de tous ses points. On utilise aussi les paramètres constitués par les courbures minimales et maximales en chaque point, ou plus couramment leur demi-somme et leur différence. Cette demi-somme et la valeur absolue de cette différence multipliées par un facteur n-1, n étant l'indice de réfraction du matériau de la lentille, sont appelées sphère moyenne et cylindre.

On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée Add, correspond à la variation de puissance entre un point L de la zone de vision de loin et un point P de la zone de vision de près, qui sont appelés respectivement point de contrôle en vision de loin et point de contrôle en vision de près, et qui représentent les points d'intersection du regard et de la surface de la lentille pour une vision à l'infini et pour une vision de lecture. Dans une même famille de lentilles, l'addition varie d'une lentille à l'autre de la famille entre une valeur d'addition minimale et une valeur d'addition maximale. Habituellement, les valeurs minimale et maximale d'addition sont respectivement de 0.75 dioptrie et 3.5 dioptries, et l'addition varie de 0.25 dioptrie en 0.25 dioptrie d'une lentille à l'autre de la famille.

Des lentilles de même addition diffèrent en un point de référence par la valeur de la sphère moyenne, appelée aussi base, mesurée sur la face opposée à l'oeil. On peut par exemple choisir de mesurer la base au point L de contrôle en vision de loin.

Pour des lentilles multifocales progressives, on définit ainsi par le choix d'un couple (addition, base) un ensemble ou jeu de faces multifocales asphériques. Habituellement, on peut ainsi définir 5 valeurs de bases et 12 valeurs d'additions, soient soixante faces multifocales. Pour chaque couple (addition, base), une lentille communément appelée « semi-fini » dont l'addition est apportée par la surface asphérique par la variation de courbure entre la zone de vision de loin et la zone de vision de près peut être réalisée. Une telle lentille présente suffisamment de matière pour que le fabricant puisse y tailler la surface opposée à la surface asphérique qui permet d'obtenir la lentille de prescription souhaitée.

Il est connu de maîtriser la performance optique du verre fini pour chaque base pour un verre unifocal, ou pour un couple (base, addition) pour un verre multifocal, en optimisant la surface asphérique du « semi-fini » de façon à ce que le verre fini issu du verre « semi-fini » présente des performances optiques :

- optimales dans des conditions de port standards choisies par le fabricant pour une prescription de puissance donnée, correspondant généralement à une prescription non astigmate c'est-à-dire qui présente un astigmatisme nul.
- non optimales, mais améliorées par rapport aux performances optiques obtenues avec un verre semi-fini non optimisé dans le cas d'une autre prescription ou de conditions de port spécifiques.

En effet, dans le cas de conditions de port particulières, le verre présentera des défauts de puissance et d'astigmatisme non maîtrisés.

De telles aberrations sur les lentilles ophtalmiques multifocales peuvent aussi se présenter pour les prescriptions toriques destinées à des porteurs astigmates. La prescription en matière ophtalmique peut en effet comprendre en plus de la prescription de puissance une prescription d'astigmatisme. Une telle prescription est effectuée par l'ophtalmologiste sous la forme d'un couple formé d'une valeur d'axe (en degrés) et d'une valeur d'amplitude (en dioptries). La valeur d'amplitude représente la différence entre les puissances minimales et maximales dans une direction donnée qui permettent de corriger le défaut visuel d'un porteur. Selon la convention choisie, l'axe représente l'orientation d'une des deux puissances par rapport à un axe de référence et dans un sens de rotation convenu. En pratique, l'axe de référence est horizontal et le sens de rotation est le sens trigonométrique direct pour chaque oeil, lorsque l'on regarde le porteur. Une valeur d'axe de +45° représente donc un axe orienté obliquement, qui lorsque l'on regarde le porteur, s'étend du quadrant situé en haut à droite jusqu'au quadrant situé en bas à gauche. Une telle prescription d'astigmatisme est mesurée sur le porteur regardant en vision de loin. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue. Il est aussi connu de l'homme de métier que la prescription en puissance et astigmatisme d'un porteur-sont usuellement désignés et notés sous les termes de sphère, de cylindre et d'axe.

Les lentilles ophtalmiques corrigeant la prescription d'astigmatisme d'un porteur peuvent être constituées de surfaces sphéro-cylindriques. En terme géométrique, on définit le cylindre par une valeur d'amplitude et une valeur d'axe. L'amplitude représente la différence absolue $1/R_1 - 1/R_2$ entre les courbures principales (multipliée par (n-1)); la valeur d'axe représente l'orientation des courbures principales dans un repère de référence, généralement lié à la surface, et dans un sens de rotation convenu.

Dans de tels cas de prescriptions toriques, le tore appliqué sur la surface opposée à la surface asphérique induit des aberrations optiques de défaut de puissance et d'astigmatisme résultant (ou résiduel). Ces aberrations optiques ont pour origine d'une part la combinaison non maîtrisée entre les aberrations de surface de la face avant asphérique et le tore de prescription, et d'autre part, les effets optiques liés à l'oblicité des rayons dans le champ.

L'homme de l'art sait compenser ces défauts. Par exemple, WO-A-98/12590 décrit une méthode de détermination par optimisation d'un jeu de lentilles ophtalmiques multifocales. Ce document propose de définir le jeu de lentilles en considérant les caractéristiques optiques des lentilles et notamment la puissance et l'astigmatisme oblique, dans les conditions du porté. La lentille est optimisée par tracé de rayons, à partir d'un ergorama associant à chaque direction du regard dans les conditions du porté un point objet visé

Il est aussi connu du document EP-A-0 990 939 un procédé de détermination par optimisation d'une lentille ophtalmique pour un porteur ayant une prescription d'astigmatisme. Ce document propose de choisir une lentille cible et d'utiliser une méthode de tracé de rayons et de minimiser la différence entre l'astigmatisme résiduel et l'astigmatisme de la lentille cible. L'astigmatisme résiduel est défini dans ce document comme l'écart en amplitude et en axe entre l'astigmatisme prescrit et l'astigmatisme généré par la lentille. Ce procédé permet une meilleure adaptation des lentilles aux porteurs astigmates, en évitant les aberrations optiques induites par l'ajout d'une surface torique. Le calcul s'effectue dans un repère lié à l'oeil, ce qui permet de tenir compte de l'effet de torsion de l'oeil lorsque le porteur regarde dans une direction excentrée.

Cependant, la mise en oeuvre d'un tel procédé suppose la connaissance de la surface asphérique multifocale de la lentille. Or, la surface asphérique peut ne pas être connue. C'est notamment le cas lorsque le laboratoire de prescription effectue la finition c'est-à-dire l'usinage final d'un verre semi-fini provenant d'un fabricant non partenaire ou concurrent du laboratoire. En effet, pour empêcher la détermination d'une surface asphérique, il est connu du brevet WO-A-2007/017766 un moyen de codage de la surface. Le procédé décrit précédemment ne peut pas être mis en oeuvre et l'astigmatisme induit par la prescription torique n'est alors pas corrigé.

Il existe donc un besoin pour améliorer les performances optiques des verres obtenus à partir de verres semi-finis dont la surface asphérique est inconnue, notamment dans le cas de prescriptions toriques ou de conditions de port personnalisées.

L'invention propose plus particulièrement un procédé de détermination d'une nappe d'asphérisation destinée à une lentille ophtalmique pour un porteur auquel un astigmatisme et une puissance ont été prescrits, comprenant les étapes de :

- choix d'une surface générique présentant des valeurs de sphère et de cylindre connues en chaque point ;

- création d'une lentille fictive cible ayant :

  - une surface avant étant la surface générique, et
  - une surface arrière étant une première surface simple,

la lentille fictive cible définissant des cibles optiques pour chaque direction du regard ;

- création d'une lentille fictive courante, la lentille fictive courante étant initialement une lentille fictive initiale d'essai ayant :

  - une surface avant étant la surface générique, et
  - une surface arrière étant une deuxième surface simple,
  - optimisation de la lentille fictive courante en modulant la surface arrière pour atteindre les cibles optiques de la lentille fictive cible pour chaque direction du regard ;
  - détermination d'une nappe complexe d'asphérisation correspondant à la surface arrière de la lentille fictive courante optimisée à laquelle est soustraite la surface arrière de la lentille fictive d'essai initiale.

Selon les modes de réalisation, le procédé de détermination d'une nappe d'asphérisation selon l'invention peut comprendre en outre une ou plusieurs des caractéristiques suivantes :

- les cibles optiques de la lentille fictive de cible sont définies dans les conditions de port standard.
- la lentille fictive courante est positionnée dans des conditions de port standard lors de l'optimisation.
- la lentille fictive courante est positionnée dans des conditions de port personnalisées lors de l'optimisation.

Selon le mode de réalisation, la première surface simple est telle que la lentille fictive cible présente :

- une valeur de puissance moyenne en un point de référence sensiblement égale à la somme de la puissance prescrite et de la moitié de l'astigmatisme prescrit, et
- une valeur de l'astigmatisme prescrit au point de référence sensiblement nulle et la deuxième surface simple est telle que la lentille fictive initiale d'essai présente :
- une valeur de la puissance moyenne en un point de référence sensiblement égale à la puissance prescrite, et
- une valeur d'astigmatisme au point de référence égale à l'astigmatisme prescrit.

Selon le mode de réalisation, la première surface simple est telle que la lentille fictive cible présente :

- une valeur de puissance moyenne en un point de référence sensiblement égale à la puissance prescrite, et
- une valeur d'astigmatisme au point de référence sensiblement égale à l'astigmatisme prescrit;

et dans lequel la deuxième surface simple est telle que la lentille fictive initiale d'essai présente :

- une valeur de puissance moyenne en un point de référence sensiblement égale à la puissance prescrite, et
- une valeur d'astigmatisme au point de référence sensiblement égale à l'astigmatisme prescrit.

Selon les modes de réalisation, le procédé selon l'invention peut comprendre en outre une ou plusieurs des caractéristiques suivantes :

- une étape de fourniture de valeurs d'indice de verre et de base, pour la lentille fictive cible et la lentille fictive initiale d'essai.
- l'étape de fourniture de valeurs d'indice de verre et de base est réalisée par la fourniture d'un verre semi-fini.
- les cibles optiques de la lentille fictive de cible sont choisies parmi des cibles de puissance, d'astigmatisme, d'astigmatisme résultant, de déviation prismatique, de distorsion ou une combinaison de celles-ci.
- la première surface simple et la deuxième surface simple sont choisies parmi un tore ou une sphère.
- la lentille ophtalmique est une lentille progressive, le point de référence étant le point de contrôle en vision de loin.

L'invention concerne aussi un procédé de détermination d'une lentille pour un porteur auquel un astigmatisme et une puissance ont été prescrits comprenant les étapes de :

- fourniture d'un verre semi-fini,

- la détermination d'une lentille ayant :

  - la surface avant du verre semi-fini, et
  - la surface arrière présentant une surface obtenue par la somme de la nappe complexe d'asphérisation obtenue par le procédé de détermination d'une nappe d'asphérisation et d'une surface simple telle que la valeur de la puissance au point de référence soit égale à la puissance prescrite et la valeur de l'astigmatisme au point de référence soit égale à l'astigmatisme prescrit.

Selon les modes de réalisation, le procédé de détermination d'une nappe d'asphérisation selon l'invention peut comprendre en outre une ou plusieurs des caractéristiques suivantes :

- le verre semi-fini fourni est une lentille progressive, la surface générique choisie présentant la même addition que le verre semi-fini.
- le verre semi-fini fourni est une lentille progressive, la surface générique choisie présentant la même longueur de progression que le verre semi-fini.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un schéma d'un système optique oeil et lentille en vue de dessus;
- figure 2, un organigramme d'un exemple de procédé de détermination d'une nappe d'asphérisation;
- figure 3, un organigramme d'un exemple de procédé de détermination d'une lentille ophtalmique ;
- figures 4-5, des représentations graphiques des caractéristiques surfaciques, sphère moyenne et cylindre respectivement, de la surface avant d'un verre semi-fini utilisé dans un exemple de mise en oeuvre du procédé;
- figures 6-7, des représentations graphiques des caractéristiques surfaciques, sphère moyenne et cylindre respectivement, de la surface générique utilisée dans un exemple de mise en oeuvre du procédé ;
- figures 8-9, des représentations graphiques des caractéristiques surfaciques, sphère moyenne et cylindre respectivement, de la nappe d'asphérisation obtenue selon un exemple de mise en oeuvre du procédé ;
- figures 10-12, des représentations graphiques des caractéristiques optiques d'une lentille obtenue selon un exemple de mise en oeuvre du procédé ;
- figures 13-15, des représentations graphiques des caractéristiques optiques d'une lentille de l'art antérieur ;
- figures 16-17, des représentations graphiques des caractéristiques surfaciques, sphère moyenne et cylindre respectivement, de la surface avant d'un verre semi-fini utilisé dans un exemple de mise en oeuvre du procédé;
- figures 18-19, des représentations graphiques des caractéristiques surfaciques, sphère moyenne et cylindre respectivement, de la surface générique utilisée dans un autre exemple de mise en oeuvre du procédé ;
- figures 20-21, des représentations graphiques des caractéristiques surfaciques, sphère moyenne et cylindre respectivement, de la nappe d'asphérisation obtenue selon un autre exemple de mise en oeuvre du procédé ;
- figures 22-24, des représentations graphiques des caractéristiques optiques d'une lentille obtenue selon un autre exemple de mise en oeuvre du procédé ;
- figures 25-27, des représentations graphiques des caractéristiques optiques d'une lentille de l'art antérieur ;
- figures 28-29, des représentations graphiques des caractéristiques surfaciques, sphère moyenne et cylindre respectivement, de la surface avant d'un verre semi-fini utilisé dans un exemple de mise en oeuvre du procédé;
- figures 30-31, des représentations graphiques des caractéristiques surfaciques, sphère moyenne et cylindre respectivement, de la surface générique utilisée dans un autre exemple de mise en oeuvre du procédé ;
- figures 32-33, des représentations graphiques des caractéristiques surfaciques, sphère moyenne et cylindre respectivement, de la nappe d'asphérisation obtenue selon un autre exemple de mise en oeuvre du procédé ;
- figures 34-36, des représentations graphiques des caractéristiques optiques d'une lentille obtenue selon un autre exemple de mise en oeuvre du procédé ;
- figures 37-39, des représentations graphiques des caractéristiques optiques d'une lentille de l'art antérieur ;
- figures 40-41, des représentations graphiques des caractéristiques surfaciques, sphère moyenne et cylindre respectivement, de la surface avant d'un verre semi-fini utilisé dans un exemple de mise en oeuvre du procédé;
- figures 42-43, des représentations graphiques des caractéristiques surfaciques, sphère moyenne et cylindre respectivement, de la surface générique utilisée dans un autre exemple de mise en oeuvre du procédé ;
- figures 44-45, des représentations graphiques des caractéristiques surfaciques, sphère moyenne et cylindre respectivement, de la nappe d'asphérisation obtenue selon un autre exemple de mise en oeuvre du procédé ;
- figures 46-48, des représentations graphiques des caractéristiques optiques d'une lentille obtenue selon un autre exemple de mise en oeuvre du procédé ;

- figures 49-51, des représentations graphiques des caractéristiques optiques d'une lentille de l'art antérieur ;
- figures 52-53, des représentations graphiques des caractéristiques surfaciques, sphère moyenne et cylindre respectivement, de la surface avant d'un verre semi-fini utilisé dans un exemple de mise en oeuvre du procédé;
- figures 54-55, des représentations graphiques des caractéristiques surfaciques, sphère moyenne et cylindre respectivement, de la surface générique utilisée dans un autre exemple de mise en oeuvre du procédé ;
- figures 56-57, des représentations graphiques des caractéristiques surfaciques, sphère moyenne et cylindre respectivement, de la nappe d'asphérisation obtenue selon un autre exemple de mise en oeuvre du procédé ;
- figures 58-60, des représentations graphiques des caractéristiques optiques d'une lentille obtenue selon un autre exemple de mise en oeuvre du procédé ;
- figures 61-63, des représentations graphiques des caractéristiques optiques d'une lentille de l'art antérieur ;
- figures 64-65, des représentations graphiques des caractéristiques surfaciques, sphère moyenne et cylindre respectivement, de la surface avant d'un verre semi-fini utilisé dans un exemple de mise en oeuvre du procédé;
- figures 66-67, des représentations graphiques des caractéristiques surfaciques, sphère moyenne et cylindre respectivement, de la surface générique utilisée dans un autre exemple de mise en oeuvre du procédé ;
- figures 68-69, des représentations graphiques des caractéristiques surfaciques, sphère moyenne et cylindre respectivement, de la nappe d'asphérisation obtenue selon un autre exemple de mise en oeuvre du procédé ;
- figures 70-72, des représentations graphiques des caractéristiques optiques d'une lentille obtenue selon un autre exemple de mise en oeuvre du procédé ; et
- figures 73-75, des représentations graphiques des caractéristiques optiques d'une lentille de l'art antérieur.

L'invention telle que définie dans le jeu de revendications se rapporte à un procédé de détermination d'une nappe d'asphérisation destinée à une lentille ophtalmique pour un porteur auquel une puissance et un astigmatisme ont été prescrits. Une nappe est définie comme une surface fictive caractérisée en tout point par son altitude. Une nappe d'asphérisation est ici définie comme une nappe complexe déterminée par optimisation des performances optiques d'un verre fini constitué de la surface avant asphérique du verre semi-fini et de la surface arrière issue de la combinaison de la nappe d'asphérisation et d'une nappe de prescription. La nappe de prescription, sphérique ou torique, permet d'adapter la lentille à l'amétropie de l'utilisateur. A l'état initial avant optimisation de la lentille, la nappe d'asphérisation est plane et donc la nappe de prescription constitue intégralement la surface de prescription. L'ajout d'une nappe d'asphérisation à la nappe de prescription permet d'améliorer les verres réalisés à partir de semi-finis dont la surface asphérique est inconnue. En particulier, les aberrations induites par la prescription d'astigmatisme ou les aberrations liées à des conditions de port spécifique sont diminuées.

L'invention propose de déterminer une nappe d'asphérisation à partir d'un verre semi-fini virtuel dont la géométrie de la surface asphérique est connue et d'ajouter la nappe ainsi obtenue à la nappe de prescription pour former la surface arrière du verre dont la surface avant asphérique est inconnue. Le procédé est notamment bien adapté pour la mise en oeuvre dans des laboratoires de prescription réalisant la finition de lentilles semi-finies.

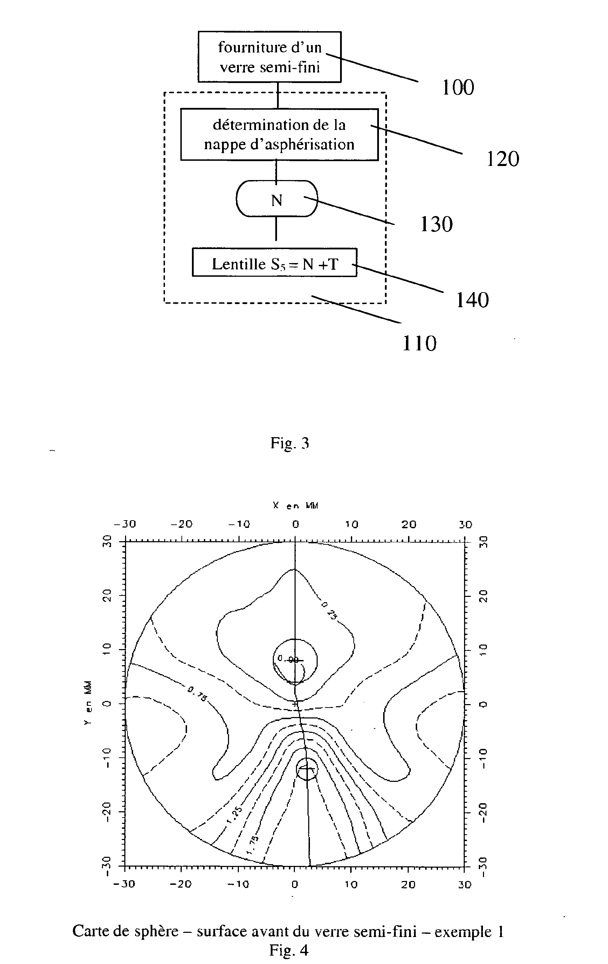

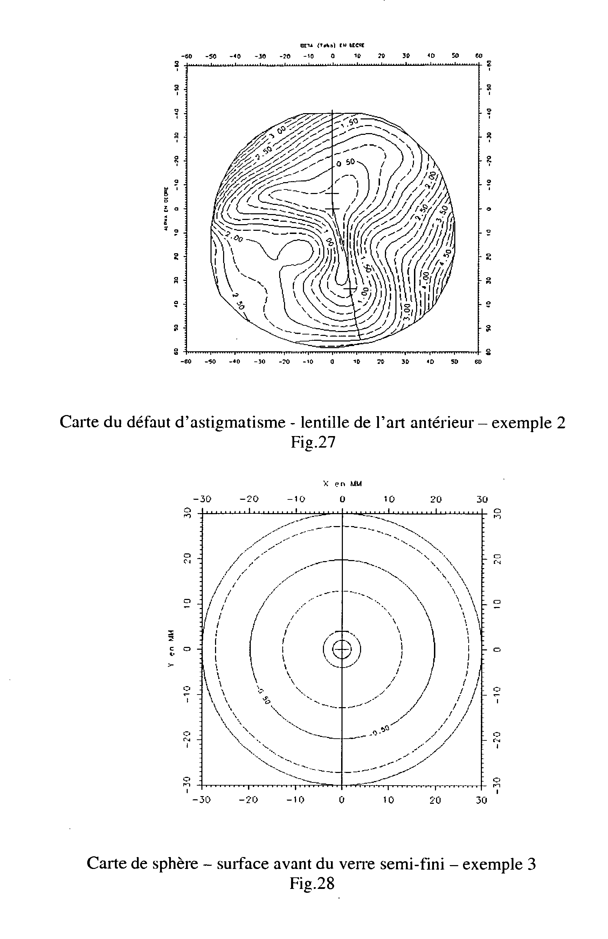

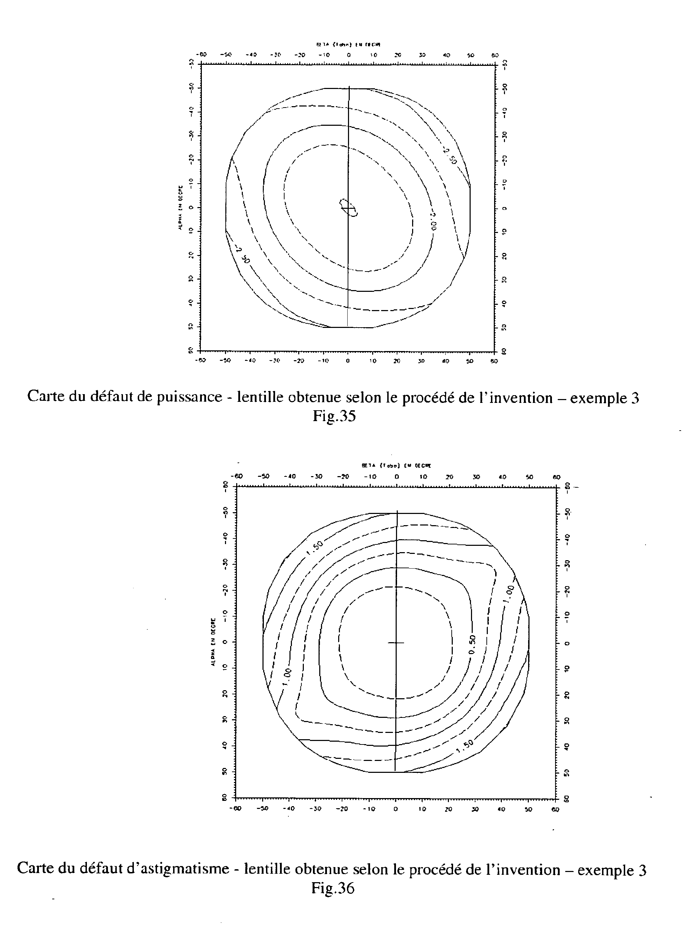

La solution s'applique non seulement à des lentilles progressives multifocales, comme dans les exemples des figures 4 à 27 et 40 à 51 ci-dessous, mais aussi à des lentilles unifocales, comme dans l'exemple des figures 28 à 39 et 52 à 75 ci-dessous. Il est également possible d'utiliser la méthode avec les lentilles multifocales, telles que les lentilles bifocales ou trifocales.

Pour chaque type de lentille, un point de référence est défini. Dans le cas d'une lentille progressive, le point de référence peut correspondre au point de contrôle en vision de loin. Dans le cas d'une lentille unifocale, le point de référence est défini comme un point où la prescription est réalisée. Un tel point peut alors être le centre géométrique de la lentille.

Le procédé de détermination s'applique en particulier à une lentille progressive. Il est intéressant d'utiliser le procédé de détermination pour une lentille progressive parce que les lentilles multifocales posent un problème particulier pour le porteur astigmate. L'astigmatisme vu par le porteur peut être considéré comme la résultante de trois composantes :

- le cylindre local de la surface progressive, caractérisé par son amplitude (ou module) et son axe.
- le cylindre (amplitude et axe) présentée par la surface de prescription permettant notamment d'atteindre la prescription au niveau du point de contrôle.;
- l'astigmatisme oblique généré par l'obliquité des rayons sur les surfaces constituant la lentille.

Le procédé de détermination s'applique aussi à une lentille optimisée pour des conditions de port particulières.

Dans la suite, à titre d'exemple, la surface asphérique inconnue est portée par la surface avant. La surface asphérique pourrait aussi être portée par la surface arrière.

De façon connue en soi, en tout point d'une surface asphérique, une sphère moyenne D peut être définie par la formule suivante:

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

Un cylindre C peut aussi être défini par la formule:

$$C = (n-1)\left|\frac{1}{R_1} - \frac{1}{R_2}\right|$$

Pour une lentille donnée, et par exemple pour une lentille multifocale, les grandeurs optiques correspondantes, à savoir une puissance et un astigmatisme sont définies.

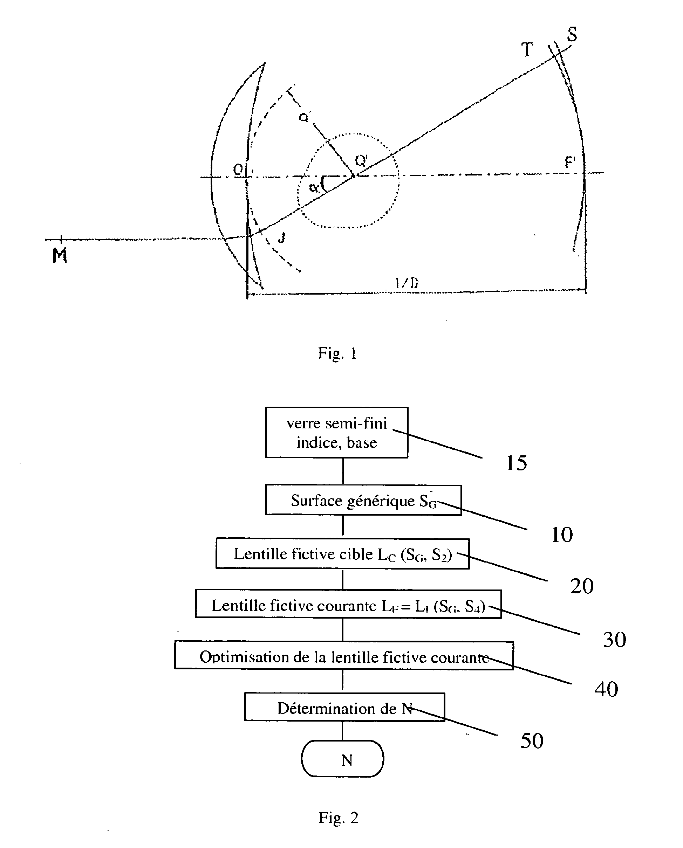

La figure 1 montre un schéma d'un système optique oeil et lentille en vue de dessus, et montre les définitions utilisées dans la suite de la description. On appelle Q' le centre de rotation de l'oeil; l'axe Q'F' représenté sur la figure en traits mixtes est l'axe horizontal passant par le centre de rotation de l'oeil et s'étendant devant le porteur - autrement dit l'axe Q'F' correspond à la direction primaire du regard. Cet axe coupe, sur la surface avant, un point de la lentille appelé croix de montage, qui est matérialisé sur les lentilles pour permettre leur positionnement par un opticien. La croix de montage est généralement située 4 mm au-dessus du centre géométrique de la surface avant. Soit le point O, point d'intersection de la surface arrière et de cet axe Q'F'. On définit une sphère des sommets, de centre Q', et de rayon q', qui est tangente à la surface arrière de la lentille en un point de l'axe horizontal. A titre d'exemple, une valeur du rayon q' de 25,5 mm correspond à une valeur courante et fournit des résultats satisfaisants lors du porté des lentilles.

Une direction donnée du regard - représentée en traits pleins sur la figure 1 correspond à une position de l'oeil en rotation autour de Q' et à un point J de la sphère des sommets; l'angle $\alpha$ est l'angle formé entre l'axe Q'F' et la projection de la droite Q'J sur le plan horizontal contenant l'axe Q'F'; cet angle apparaît sur le schéma de la figure 1. L'angle $\beta$ est l'angle formé entre l'axe Q'F' et la projection de la droite Q'J sur le plan vertical contenant l'axe Q'F'. Une direction donnée du regard correspond donc à un point J de la sphère des sommets ou à un couple ($\alpha$, $\beta$). L'image d'un point de l'espace objet, dans une direction du regard, et à une distance objet donnée, se forme entre deux points S et T correspondant à des distances focales minimale et maximale, qui seraient des distances focales sagittale et tangentielle dans le cas de surfaces de révolution. Sur l'axe optique, l'image d'un point de l'espace objet à l'infini se forme au point F'. La distance D est la focale du système oeil-lentille.

On appelle ergorama une fonction associant à chaque direction du regard la distance habituelle du point objet. Typiquement, en vision de loin suivant la direction primaire du regard, le point objet est à l'infini. En vision de près, suivant une direction correspondant sensiblement à un angle $\alpha$ de l'ordre de 35° et à un angle $\beta$ de l'ordre de 5°, la distance objet est de l'ordre de 30 à 50 cm. Pour plus de détails sur une définition possible d'un ergorama, on pourra consulter FR-A-2 753 805 (US-A-6 318 859). Ce document décrit un ergorama, sa définition et son procédé de modélisation. Un ergorama particulier consiste à ne prendre que des points à l'infini. Pour le procédé de l'invention, on peut considérer des points à l'infini ou non. L'ergorama peut aussi être fonction de l'amétropie du porteur.

A l'aide de ces éléments, on peut définir une puissance et un astigmatisme, dans chaque direction du regard. Pour une direction du regard ($\alpha$, $\beta$), on considère un point M objet à une distance objet donnée par l'ergorama. Dans l'espace objet, on définit, pour le point M sur le rayon lumineux correspondant, une proximité objet PO comme l'inverse de la distance MJ entre le point M et le point J de la sphère des sommets:

$$PO = 1/MJ$$

Ceci permet un calcul de la proximité objet dans le cadre d'une approximation lentille mince en tout point de la sphère des sommets, qui est utilisée pour la détermination de l'ergorama. Pour une lentille réelle, on peut à l'aide d'un programme de tracé de rayons considérer la proximité objet comme l'inverse de la distance entre le point objet et la surface avant de la lentille, sur le rayon correspondant.

Toujours pour la même direction du regard ($\alpha$,$\beta$), l'image d'un point M ayant une proximité objet donnée se forme entre deux points S et T correspondant respectivement à des distances focales minimale et maximale (qui seraient des distances focales sagittale et tangentielle dans le cas de surfaces de révolution). On appelle proximité image du point M, la quantité:

$$PI = \frac{1}{2}\left(\frac{1}{JT} + \frac{1}{JS}\right)$$

Par analogie avec le cas de la lentille mince, on définit ainsi, dans une direction donnée du regard et pour une proximité objet donnée, i.e. pour un point de l'espace objet sur le rayon lumineux correspondant, une puissance optique comme la somme de la proximité image et de la proximité objet.

$$P = PO + PI = \frac{1}{MJ} + \frac{1}{2}\left(\frac{1}{JT} + \frac{1}{JS}\right)$$

Avec les mêmes notations, on définit dans chaque direction du regard et pour une proximité objet donnée, une aberration d'astigmatisme AA comme

$$AA = \left|\frac{1}{JT} - \frac{1}{JS}\right|$$

Cette définition correspond à l'astigmatisme du faisceau de rayons créé par la lentille. On remarque que la définition fournit, dans la direction primaire du regard, la valeur classique de l'astigmatisme.

On obtient ainsi des définitions possibles selon l'invention de la puissance optique et de l'astigmatisme de la lentille, dans les conditions du porté, qui peuvent être calculés comme expliqué dans B. Bourdoncle et autres, Ray tracing through progressive ophthalmic lenses, 1990 International Lens Design Conference, D.T. Moore ed., Proc. Soc. Photo. Opt. Instrum. Eng. On entend par conditions de port standard la position de la lentille par rapport à l'oeil du porteur moyen, définie notamment par l'angle pantoscopique, la distance verre-oeil, le galbe. On pourrait aussi utiliser d'autres définitions. Les définitions présentées ci-dessus présentent l'avantage d'être définies simplement, et de pouvoir être calculées facilement à l'aide d'un programme de tracé de rayons, pour une lentille donnée. Dans toute la suite, la puissance optique et l'astigmatisme peuvent être calculés de telle sorte que la prescription puisse être atteinte au niveau du point de contrôle soit pour un porteur portant ses verres dans les conditions du porté soit pour le frontofocomètre.

Le procédé de l'invention vise à la détermination d'une nappe d'asphérisation destinée à une lentille ophtalmique pour un porteur auquel une puissance et un astigmatisme ont été prescrits. L'ophtalmologiste ou l'opticien notent usuellement la prescription de chaque oeil sous la forme d'un triplet (sphère SPH, cylindre CYL , axe AXE) dans une convention donnée, soit dite « cylindre positif », soit « cylindre négatif ». La puissance prescrite est nommée P et vaut SPH. L'astigmatisme prescrit est appelée A. Son module est CYL et son axe est AXE. La puissance moyenne prescrite au porteur est alors égale SPH + CYL/2. L'ophtalmologiste (ou l'opticien) peut aussi mesurer les conditions de port de monture spécifiques au porteur et notamment la distance verre-oeil, l'angle pantoscopique et le galbe de la monture choisie.

Le procédé peut concerner aussi bien un porteur astigmate ayant une prescription de puissance nulle qu'une prescription de puissance non nulle. Le procédé peut aussi s'appliquer pour un porteur non astigmate mais dont les conditions de port de la monture sont particulières. On parle de « conditions de port particulières » lorsque les valeurs d'angle pantoscopique, de galbe et de distance verre-oeil sont différentes de valeurs moyennes définies par le fabricant. Typiquement, l'angle pantoscopique moyen est 8°, le galbe est 0° et la distance verre-oeil 25,5 mm (conditions de port standard). Certains porteurs peuvent présenter une morphologie et/ou choisir une monture qui conduit à des valeurs différentes de ces moyennes. On parle alors de conditions de port particulières ou personnalisées.

La figure 2 illustre un organigramme d'un exemple de mise en oeuvre du procédé de détermination de la nappe d'asphérisation.

Le procédé peut comprendre une étape 15 de fourniture de valeurs d'indice de verre et de base. Cela permet de disposer d'informations supplémentaires sur les besoins du porteur. Le procédé permet ainsi d'obtenir une nappe d'asphérisation mieux adaptée aux besoins du porteur.

L'étape 15 peut être réalisée par la fourniture d'un verre semi-fini. Un verre semi-fini est un verre dont seule une surface est usinée. En particulier, les fabricants de lentilles ophtalmiques multifocales fabriquent généralement une famille de verres semi-finis. Ainsi, dans un premier temps, seule la surface des verres de la même famille est usinée sur une surface ; puis la surface opposée est usinée ultérieurement selon une forme sphérique ou torique avec des courbures appropriées à chaque porteur de lunettes selon les prescriptions d'un ophtalmologiste. Les informations d'indice et de base relatives au semi-fini sont ainsi facilement connues. Ce sont généralement des informations renseignées par le fabricant pour chacun de ses produits.

A la fin de l'étape 15, la prescription de l'ophtalmologiste, soit les données P, A, l'addition Add s'il y a lieu et les conditions de port ainsi que l'indice et la base sont connus. Seule la prescription et les conditions de port sont connues si le procédé est mis en oeuvre sans l'étape 15.

Le procédé de détermination comprend une étape 10 de choix d'une surface générique $S_G$. La surface $S_G$ présente des valeurs de sphère et cylindre connues en chaque point. La surface $S_G$ peut notamment être représentée par une équation donnant l'altitude de la surface en chaque point. Une surface générique peut ainsi être toute surface. La surface générique $S_G$ est choisie pour être la mieux adaptée au produit à usiner compte tenu des données connues. Par exemple, supposons que la longueur de progression définie comme la distance entre la croix de montage et le point de contrôle en vision de près soit courte. Dans un tel cas, la surface générique $S_G$ sélectionnée présente également une longueur de progression courte, la longueur de progression pouvant être différente. En particulier, lorsque le verre semi-fini fourni est une lentille progressive, il est avantageux que la surface générique $S_G$ choisie présente la même longueur de progression que le verre semi-fini afin d'améliorer les résultats obtenus par le procédé. Pour la même raison, la surface générique $S_G$ choisie peut présenter la même addition que le verre semi-fini fourni. De plus, la surface $S_G$ peut être adaptée dans la base et l'indice du verre semi-fini si ils sont connus.

Le procédé de détermination comporte également une étape 20 de création d'une lentille fictive cible. La lentille fictive cible est appelée $L_C$ dans la suite. La lentille $L_C$ comporte une surface avant, une surface arrière et un point de référence tel que défini précédemment. La surface avant de la lentille $L_C$ est la surface générique $S_G$. La surface arrière de la lentille $L_C$ est une surface simple appelée $S_2$. A titre d'exemple, la surface simple peut être une sphère ou un tore. Une surface simple peut être aisément calculée.

La surface simple $S_2$ peut être choisie de différentes manières. La surface simple $S_2$ peut notamment être telle que la puissance $P_C$ et l'astigmatisme $A_C$ de la lentille fictive cible au point de référence sont sensiblement égales respectivement à la somme de la puissance prescrite et de la moitié de l'astigmatisme prescrit et à un astigmatisme nul. Cela est illustré par les relations mathématiques (1) et (2) suivantes :

$$P_C = P + A/2 = SPH + CYL/2 \qquad (1)$$

$$A_C = 0 \qquad (2)$$

Dans le cas particulier d'une lentille fictive cible $L_C$ progressive, le point de référence peut être défini comme le point de contrôle en vision de loin.

La lentille fictive cible $L_C$ a ainsi une surface arrière $S_2$ conformée de telle sorte que la lentille cible réponde à une prescription cible qui comporterait une puissance $P_C$ égale à P+A/2 et pas d'astigmatisme.

Un tel choix de la surface simple $S_2$ peut notamment être utilisé lorsque la prescription d'astigmatisme n'est pas nulle. La lentille fictive de cible $L_C$ des exemples des figures 4 à 39 et 64 à 75 ci-dessous est définie ainsi.

La surface simple $S_2$ peut aussi être choisie telle que la puissance $P_C$ et l'astigmatisme $A_C$ de la lentille fictive cible au point de référence sont sensiblement égales respectivement à la puissance prescrite P et à l'astigmatisme A prescrit. Cela est illustré par les relations mathématiques (3) et (4) suivantes :

$$P_C = P = SPH \qquad (3)$$

$$A_C = A = CYL \qquad (4)$$

Dans le cas particulier d'une lentille fictive cible $L_C$ progressive, le point de référence peut être défini comme le point de contrôle en vision de loin.

La lentille fictive cible $L_C$ a ainsi une surface arrière conformée de telle sorte que la lentille cible réponde à une prescription cible qui comporterait une puissance égale à P et un astigmatisme égal à A.

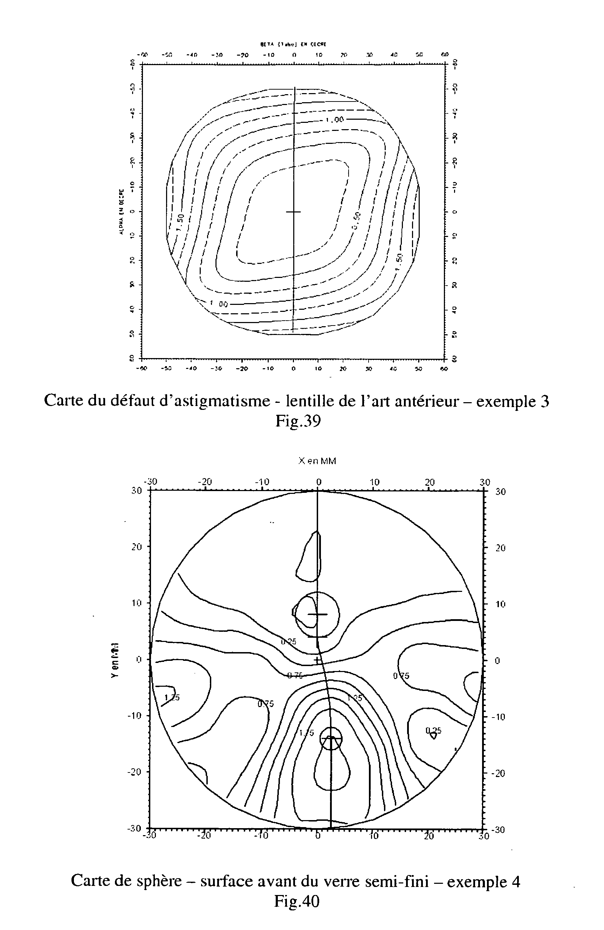

Un tel choix de la surface simple $S_2$ peut notamment être utilisé lorsque l'on souhaite tenir compte des conditions de port de la lentille. La lentille fictive de cible Le des exemples des figures 40 à 63 ci-dessous est définie ainsi.

Lorsque le procédé mis en oeuvre comporte une étape 15 de fourniture de valeur d'indice et de valeur de base selon l'exemple de la figure 2, la lentille fictive de cible $L_C$ a en outre la valeur de l'indice et la valeur de base.

La lentille cible $L_C$ définit des cibles optiques pour chaque direction du regard. Les cibles optiques peuvent notamment être des cibles de puissance, d'astigmatisme (ou astigmatisme résultant), de déviation prismatique, de distorsion ou une combinaison de celles-ci. Par exemple, dans le cas d'une cible d'astigmatisme, on simule pour la lentille $L_C$, à l'aide d'un programme de tracé de rayons, l'astigmatisme pour un ensemble de directions de regard, tel que définie plus haut, dans la situation du porté, et à partir des valeurs de proximité données par l'ergorama. La lentille cible peut alors être virtuellement placée dans les conditions de port standard.

A l'étape 30 du procédé de détermination, une lentille fictive courante $L_F$ est créée. La lentille fictive courante est une lentille dont la surface arrière est modulable.

La lentille fictive courante $L_F$ initialement choisie est une lentille fictive initiale d'essai. La lentille fictive initiale d'essai est notée $L_I$. La lentille initiale d'essai $L_I$ comporte une surface avant, une surface arrière et un point de référence tel que défini précédemment. La surface avant de la lentille fictive initiale est la surface générique $S_G$. La surface arrière $S_4$ de la lentille fictive initiale d'essai $L_I$ est une surface simple comme une sphère ou un tore. La surface simple $S_4$ est telle que la puissance $P_I$ et l'astigmatisme $A_I$ de la lentille initiale d'essai $L_I$ au point de référence sont sensiblement égales respectivement à la puissance prescrite et à l'astigmatisme prescrit. Cela est traduit par les relations (5) et (6) suivantes :

$$P_I = P = SPH \qquad\qquad (5)$$

$$A_I = A = CYL \qquad\qquad (6)$$

Dans le cas particulier d'une lentille $L_I$ progressive, les relations (5) et (6) signifient que la valeur de la puissance moyenne au point de contrôle en vision de loin est égale à la puissance moyenne prescrite P et la valeur de l'astigmatisme au point de contrôle en vision de loin est égale à l'astigmatisme prescrit A.

La lentille initiale d'essai $L_I$ a ainsi une surface arrière $S_4$ conformée de telle sorte que la lentille initiale réponde à une prescription qui comporterait une puissance de P et un astigmatisme de A.

Lorsque le procédé mis en oeuvre comporte une étape 15 de fourniture de valeur d'indice et de valeur de base comme l'exemple de la figure 2, la lentille fictive initiale d'essai $L_I$ a en outre la valeur de l'indice et la valeur de base.

La lentille fictive courante obtenue à la fin de l'étape 30 comporte une surface avant de surface $S_G$ et une surface arrière conformée de telle sorte que la lentille fictive courante réponde à une prescription qui comporterait une puissance de P et un astigmatisme de A. Cette face arrière peut être décomposée en deux nappes fictives, la première $N_{F1}$ ayant la géométrie de la surface arrière $S_4$ ci-dessus déterminée et permettant à la lentille fictive courante répondre à la prescription, la deuxième nappe $N_{F2}$ étant une surface plane. La surface arrière est alors définie comme la somme en altitude des deux nappes $N_{F1}$ et $N_{F2}$.

Le procédé comporte également l'étape 40. L'étape 40 est l'optimisation optique de la lentille fictive courante $L_F$. La surface arrière de la lentille fictive courante $L_F$ est modulée pour atteindre les cibles de défauts optiques de la lentille cible $L_C$ pour chaque direction du regard. Plus particulièrement, on optimise la nappe $N_{F2}$ de la face arrière de la lentille courante.

Le but du programme d'optimisation, en partant d'une lentille à optimiser, est de s'approcher autant que possible de la lentille cible en terme de caractéristiques optiques. On peut pour cela considérer une fonction coût, représentative des écarts de critères optiques entre la lentille à optimiser et la lentille cible, définie comme suit. Pour un ensemble de points de la lentille ou de directions du regard, indicés par une variable i, on considère la fonction de mérite écrite sous la forme:

$$\sum p_i \sum W_{ij}\left(V_{ij} - C_{ij}\right)^2$$

où : - $p_i$ est une pondération du point i;
-$V_{ij}$ est la valeur du j-ième type de paramètre au point i;
- $C_{ij}$ est la valeur cible du j-ième type de paramètre au point i;
- $W_{ij}$ est la pondération du j-ième type de paramètre au point i.

On peut par exemple parvenir à des résultats appropriés en considérant un ensemble de 1000 points, répartis le long de la méridienne (100 points) et sur le reste de la lentille.

On peut fixer j à 2, et utiliser des paramètres qui sont la puissance porteur et l'astigmatisme résultant, comme expliqué plus haut.

La pondération $p_i$ des points i permet d'affecter un poids plus ou moins important aux diverses régions de la lentille. Il est par exemple préférable de prévoir une pondération importante au centre du verre, et de diminuer la pondération avec l'éloignement par rapport à la méridienne.

La valeur $V_{ij}$ est mesurée pour le point i par un programme de tracé de rayons, en utilisant les définitions de

puissance porteur et d'aberration d'astigmatisme données plus haut, à partir de la valeur de proximité fournie par l'ergorama. $V_{i1}$ est la valeur de puissance porteur mesurée au point i et $V_{i2}$ est la valeur d'aberration d'astigmatisme mesurée au point i.

Plus précisément, on peut procéder comme suit. Dans la direction $(\alpha,\beta)$ du point i, on construit par un programme de tracé de rayons le rayon issu du centre de rotation de l'oeil, qui traverse la surface arrière de la lentille, la lentille, puis la surface avant et débouche dans l'espace objet. On considère ensuite le point objet situé sur le rayon ainsi tracé à une distance de la surface avant du verre égale à l'inverse de la proximité objet donnée par l'ergorama pour la direction $(\alpha,\beta)$. A partir de ce point objet, on trace une pluralité de rayons, par exemple trois, vers la lentille, pour reconstruire les points J et T de la figure 1; on procède ainsi à une évaluation exacte de l'image obtenue d'un point objet donné. On calcule ainsi la proximité image et l'astigmatisme $V_{i2}$. A partir de l'ergorama et de la proximité image calculée, on détermine la puissance moyenne $V_{i1}$ dans la direction $(\alpha,\beta)$.

Les valeurs $C_{ij}$ sont les valeurs cibles: dans l'exemple, $C_{i1}$ est la valeur de puissance moyenne de la lentille fictive cible $L_C$ déterminée à l'étape 20 et $C_{i2}$ est la valeur d'astigmatisme, au point i de la lentille Le.

Wij est la pondération du j-ième type de paramètre au point i. On peut ainsi privilégier, pour un point donné, la puissance ou l'astigmatisme.

On définit donc de cette façon, une cible, et une fonction coût représentative des écarts des caractéristiques optiques d'une lentille par rapport à cette cible. Une telle fonction coût est évidemment positive et doit être minimisée au cours du processus d'optimisation.

Pour procéder à l'optimisation, il suffit alors de choisir une lentille de départ comme décrit à l'étape 30 du procédé et une méthode de calcul permettant de faire diminuer par itérations la valeur de la fonction coût.

On peut avantageusement utiliser comme méthode de calcul une méthode des moindres carrés amortis (DLS), ou encore toute autre méthode d'optimisation connue en soi.

On arrive ainsi, pour une prescription donnée et, pour une addition donnée dans le cas d'une lentille progressive, à une lentille optimisée, après itérations du programme d'optimisation. En utilisant une méthode des moindres carrés amortis, la fonction coût définie plus haut, et une telle lentille de départ, il suffit de procéder à une dizaine d'itérations pour arriver dans la plupart des cas à une lentille présentant de performances optiques satisfaisantes.

Le positionnement dans lequel la lentille fictive courante $L_F$ est optimisée peut varier. La lentille fictive courante $L_F$ peut être positionné dans des conditions de port standard lors de l'optimisation. C'est notamment le cas des figures 4 à 39 ci-dessous. La lentille fictive courante $L_F$ peut également être positionnée dans des conditions de port personnalisées lors de l'optimisation comme dans les figures 40 à 75 ci-dessous. Cela permet d'adapter la lentille aux conditions de port particulières de chaque individu.

A l'issue de l'étape 40, une lentille courante optimisée est ainsi obtenue

Le procédé de détermination de la nappe d'asphérisation comprend en outre une étape 50 de détermination d'une nappe N complexe d'asphérisation. La nappe N correspond à $N_{F2}$. Un tel procédé utilise seulement la prescription donnée au porteur et éventuellement des conditions de port personnalisées, la base et l'indice du verre semi-fini. Le procédé permet donc d'obtenir une nappe N complexe d'asphérisation sans connaître avec précision la surface asphérisée du verre semi-fini.

Ainsi, la nappe N d'asphérisation obtenue selon le procédé d'asphérisation peut notamment être utilisée dans un procédé de détermination d'une lentille ophtalmique.

La figure 3 illustre un organigramme d'un exemple de mise en oeuvre d'un tel procédé de détermination. Le procédé de détermination de la lentille comprend une étape 100 de fourniture d'un verre semi-fini. Le verre semi-fini a une surface avant dont les caractéristiques peuvent ne pas être connues. C'est notamment le cas si le verre semi-fini provient d'un fabricant non partenaire ou concurrent du laboratoire.

Le procédé comporte également une étape 110 de détermination de la lentille ophtalmique. La lentille ophtalmique est destinée à un porteur auquel une puissance et un astigmatisme ont été prescrits. Avec la prescription du porteur, la fourniture du verre semi-fini et éventuellement les conditions de port personnalisées, il est possible de mettre en oeuvre le procédé de détermination d'une nappe d'asphérisation tel que décrit précédemment. Les étapes décrites en relation avec la figure 2 correspondent à l'étape 120 de la figure 3 ; une nappe N d'asphérisation est ainsi obtenue à l'étape 130. La lentille a une surface avant dont la géométrie correspond à la surface avant du verre semi-fini. La lentille ophtalmique comporte en outre une surface arrière de surface $S_5$.

A l'étape 140, la surface $S_5$ est obtenue par la somme de la nappe N complexe d'asphérisation obtenue précédemment et d'une surface simple T. Dans le cas d'une prescription d'astigmatisme, la surface simple T est un tore. La surface simple T utilisée est telle que la valeur de la puissance au point de référence soit égale à la puissance prescrite et la valeur de l'astigmatisme au point de référence soit égale à l'astigmatisme prescrit. La surface simple T utilisée permet de répondre à la prescription du porteur.

Ainsi, à l'issue du calcul, la surface arrière de la lentille ophtalmique est définie par la somme d'une première nappe conventionnelle T répondant à la prescription et une nappe d'asphérisation N. La somme de ces deux nappes combinées permet d'obtenir l'équation de la surface arrière à usiner. L'équation de la surface arrière à usiner est de ce fait obtenue de manière indépendante de la nappe asphérique de la surface avant du verre semi-fini. L'équation de la surface arrière ne dépend que de la prescription, de l'indice et de la base et éventuellement des conditions de port personnalisées. De ce fait, le procédé est applicable dans des laboratoires de prescription qui, à partir de verres semi-finis quelquonques, obtiennent des lentilles ayant les caractéristiques de la prescription. De plus, la surface arrière $S_5$ ainsi obtenue peut être réalisée avec des dispositifs d'usinage direct déjà existants.

La nappe d'asphérisation permet ainsi d'améliorer les performances optiques des verres obtenus à partir de verres semi-finis dont la surface complexe est inconnue. En particulier, la nappe d'asphérisation permet de réduire l'astigmatisme résultant. La nappe d'asphérisation réduit aussi les aberrations dues à des conditions de port personnalisées. Le procédé permet donc d'obtenir une nappe N complexe d'asphérisation sans connaître avec précision la surface asphérisée du verre semi-fini.

Dans le cas d'une prescription torique, les lentilles obtenues par le procédé ont de plus l'avantage de compenser l'astigmatisme résultant.

Dans le cas de conditions de port particulières, les lentilles obtenues par le procédé ont l'avantage de compenser les défauts optiques introduits par ces conditions de port.

En outre, les avantages précédemment évoqués peuvent être combinés dans le cas d'un porteur astigmate présentant des conditions de port particulières.

Les exemples qui suivent donnent plusieurs modes de réalisation de l'invention.

Exemple 1

Dans cet exemple, on cherche à obtenir une lentille multifocale progressive pour la prescription suivante :

- sphère prescrite : 0 dioptries,
- cylindre prescrit : 3 dioptries,
- axe de 45°,
- addition de 2 dioptries.

Les conditions de port de la lentille multifocale pour cette prescription sont des conditions de port standard.

Un verre semi-fini dont la surface avant est inconnue est fourni. L'indice du verre semi-fini est connu ou mesuré. Il vaut 1,665. De même, la base du verre semi-fini est connue et vaut 4 dioptries.

On cherche à déterminer la surface arrière de la lentille multifocale pour répondre à la prescription précédente.

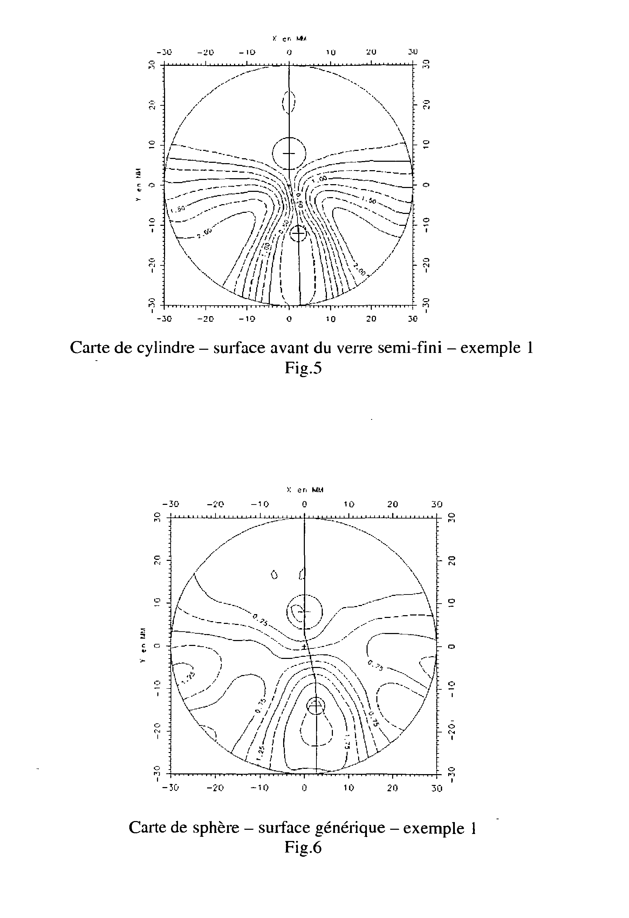

Afin de pouvoir effectuer des comparaisons sur la lentille une fois finie, on utilise un verre semi-fini dont la surface avant est connue. Les figures 4 à 5 montrent des représentations des caractéristiques surfaciques de la surface avant du verre semi-fini. La figure 4 montre les lignes d'isosphère moyenne de la surface avant de la lentille ; les axes sont gradués en mm ; la figure 5 montre les lignes d'isocylindre, avec les mêmes axes. On appelle lignes d'isosphère les lignes constituées par les projections dans le plan tangent à la surface progressive en O des points de la surface présentant une sphère moyenne de même valeur. De la même façon, on appelle lignes d'isocylindre les lignes constituées par la projection dans le plan précité des points de la surface présentant un cylindre de même valeur.

Le procédé de détermination est mis en oeuvre sans prendre en compte la surface avant du verre semi-fini. Pour le procédé de détermination, la surface avant du verre semi-fini est inconnue.

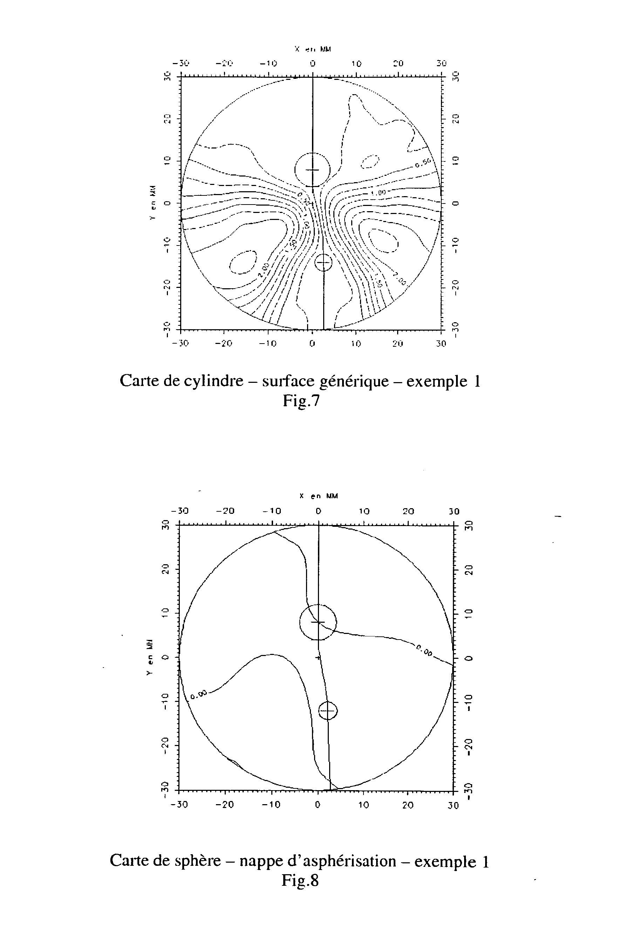

A l'étape 10 du procédé de détermination de la nappe d'asphérisation, une surface générique est choisie. Les figures 6 et 7 montrent des représentations graphiques des caractéristiques surfaciques de la surface générique, avec les mêmes conventions que les figures 4 à 5.

La comparaison des figures 4 et 6 d'une part et 5 et 7 d'autre part montrent bien que la surface générique choisie n'est pas la surface avant du verre semi-fini. Cela illustre le fait que le procédé est mis en oeuvre indépendamment de la surface avant du verre semi-fini.

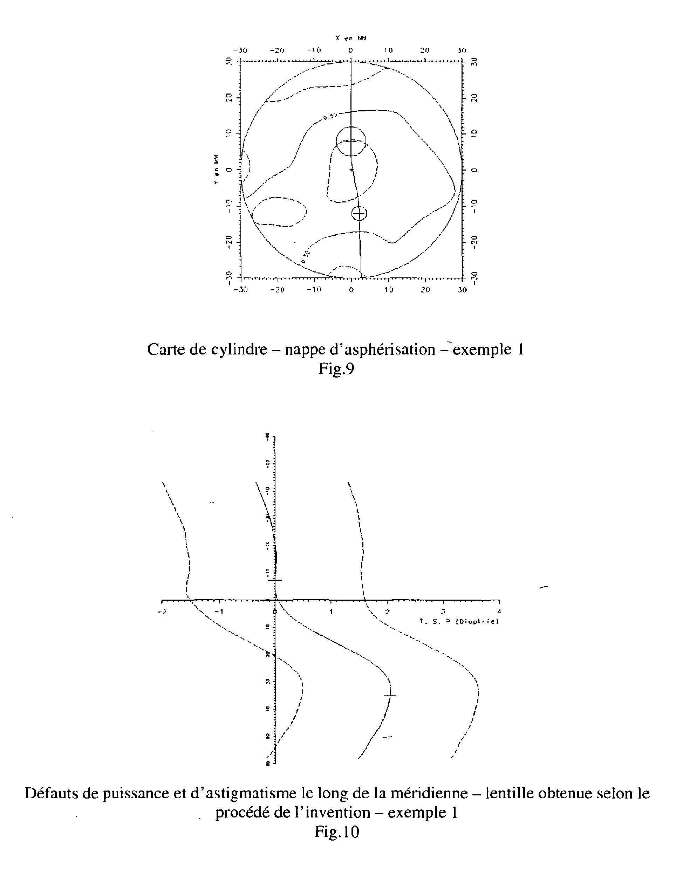

A l'issue du calcul, à l'étape 50, une nappe d'asphérisation est obtenue. Les figures 8 et 9 montrent des représentations graphiques des caractéristiques surfaciques de la nappe d'asphérisation, avec les mêmes conventions que les figures 4 à 5.

L'équation de la surface arrière de la lentille ophtalmique multifocale peut alors être obtenue à l'étape 110 du procédé. La lentille peut alors être obtenue par usinage de la surface arrière du verre semi-fini fourni.

Les caractéristiques optiques présentées ensuite dans les figures 10 à 15 ont été obtenues par calcul. Les figures 10 à 12 montrent des représentations graphiques des caractéristiques optiques d'une lentille obtenue selon le procédé de l'invention ; la figure 10 montre la puissance selon la méridienne, avec la définition de puissance donnée plus haut. Les abscisses sont graduées en dioptries, et les ordonnées donnent la direction de regard ; le trait plein montre la puissance, et les traits interrompus les quantités 1/JT et 1/JS définies à la figure 1, pour des distances objets correspondant à un ergorama représentatif des distances des points objets dans chaque direction du regard et simulant un espace objet moyen. La figure 10 donne ainsi accès au défaut de puissance et d'astigmatisme selon la méridienne.

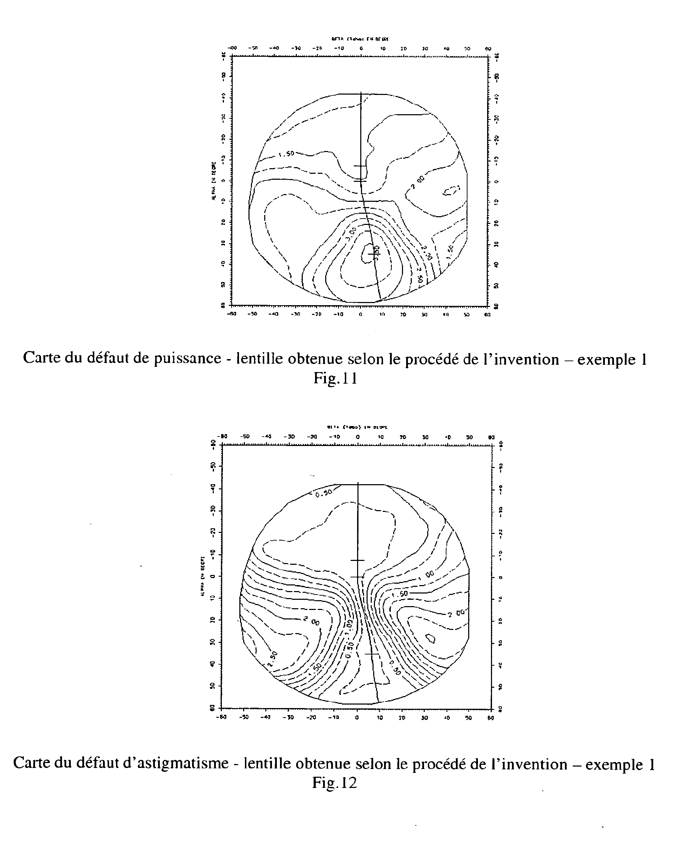

La figure 11 est une représentation graphique des lignes d'égale puissance, i.e. des lignes formées des points ayant une valeur de puissance identique. Les axes des abscisses et des ordonnées donnent respectivement des angles P et $\alpha$. La figure 11 permet ainsi de visualiser une carte du défaut de puissance. La figure 12 montre, avec les mêmes axes, les lignes d'égal astigmatisme résultant. La figure 12 est ainsi une représentation graphique du défaut d'astigmatisme.

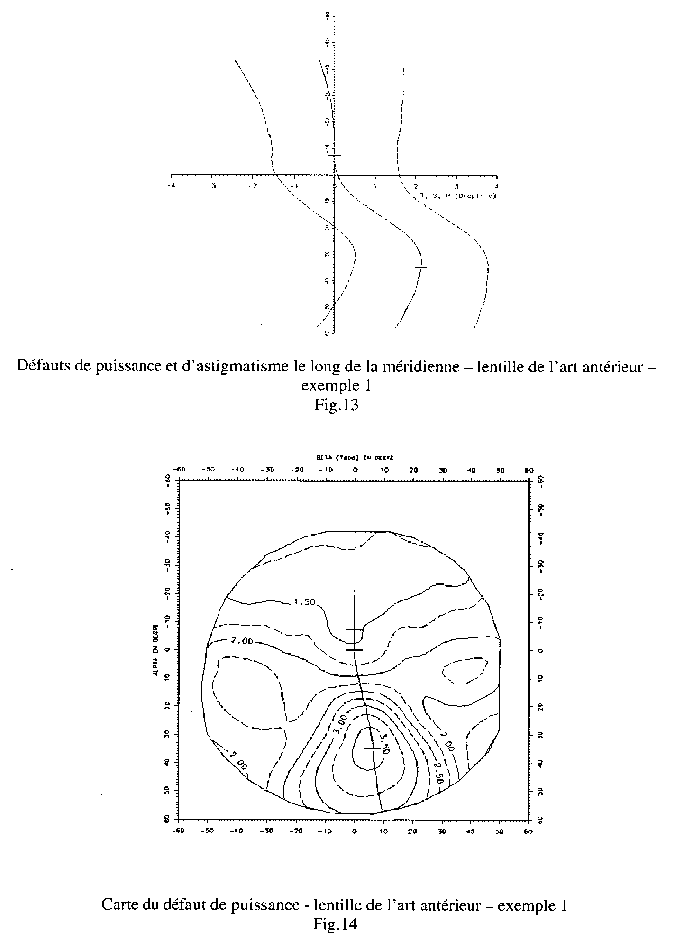

Les figures 13 à 15 montrent des représentations graphiques des caractéristiques optiques d'une lentille de l'art antérieur. La lentille de l'art antérieur est une lentille dans laquelle la surface arrière porte un tore simple et la surface avant est la surface avant du verre semi-fini. Les figures 13 à 15 montrent des représentations graphiques analogues à celles des figures 10 à 12, avec les mêmes conventions.

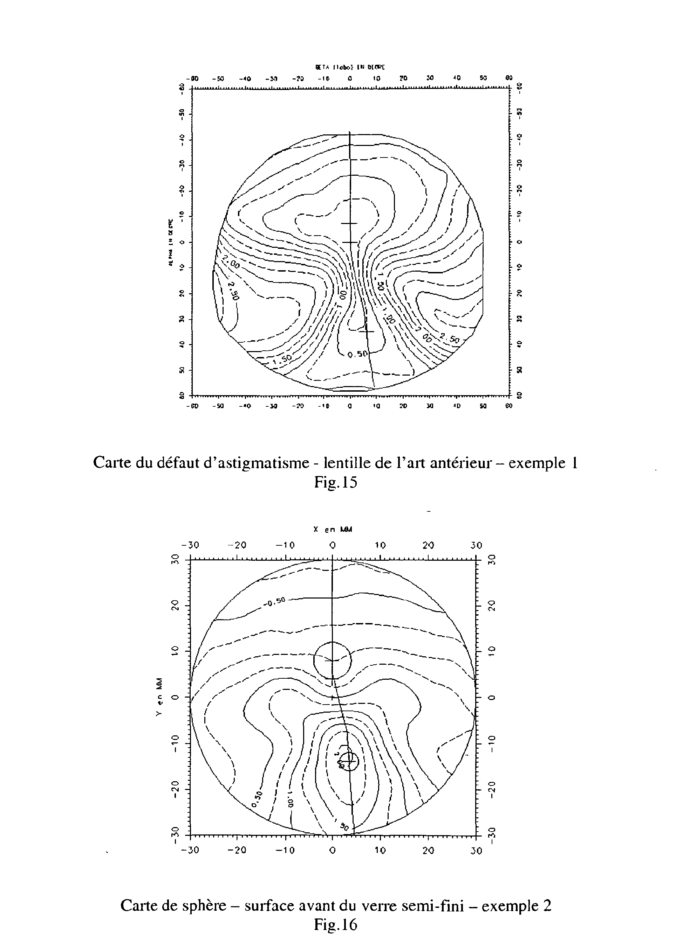

Dans le cas de la lentille obtenue par le procédé de l'invention, la comparaison des résultats montre que l'astigmatisme est réduit le long de la méridienne. En outre, les lignes d'isoastigmatisme de la lentille obtenue par le procédé de l'invention (figure 12) sont plus dégagées en vision de loin et en vision de près que celles de la lentille de l'art antérieur (figure 15).

Exemple 2

Dans cet exemple, on cherche à obtenir une lentille multifocale progressive pour la prescription suivante :

- sphère prescrite : 5 dioptries,
- cylindre prescrit : 3 dioptries,
- axe de 45°,
- addition : 2 dioptries.

Les conditions de port de la lentille multifocale pour cette prescription sont des conditions de port standard.

Un verre semi-fini est fourni. L'indice du verre semi-fini est connu ou mesuré. Il vaut 1,665. De même, la base du verre semi-fini est connue et vaut 7,5 dioptries. On cherche à déterminer la surface arrière de la lentille unifocale pour répondre à la prescription précédente.

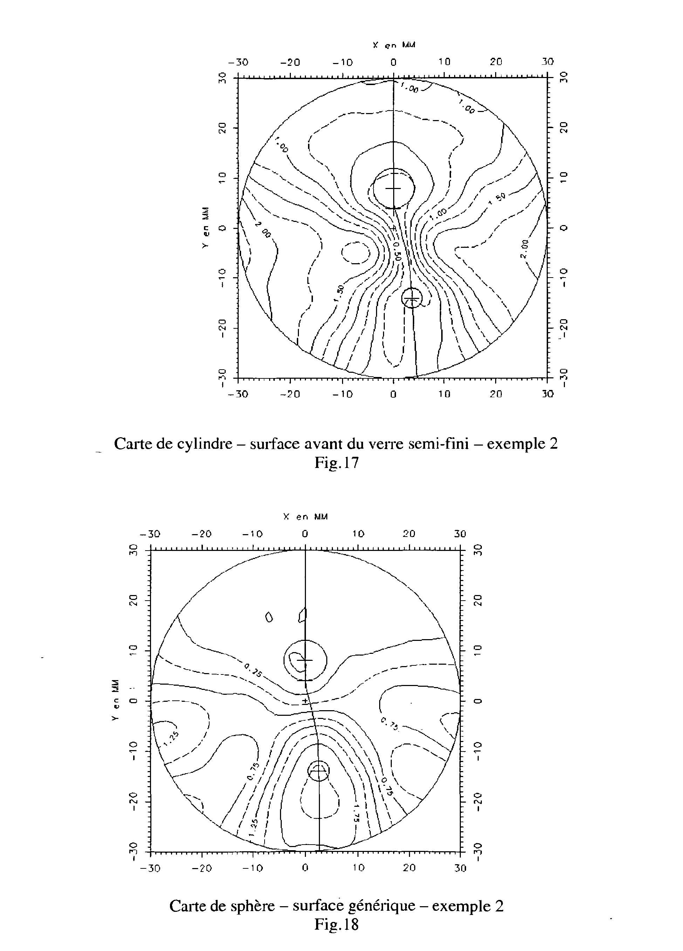

Afin de pouvoir effectuer des comparaisons sur la lentille une fois finie, on utilise un verre semi-fini dont la surface avant est connue. Les figures 16 et 17 montrent des représentations graphiques des caractéristiques surfaciques de la surface avant du verre semi-fini, avec les mêmes conventions que les figures 4 à 5.

Le procédé de détermination est mis en oeuvre sans prendre en compte la surface avant du verre semi-fini. Pour le procédé de détermination, la surface avant du verre semi-fini est inconnue.

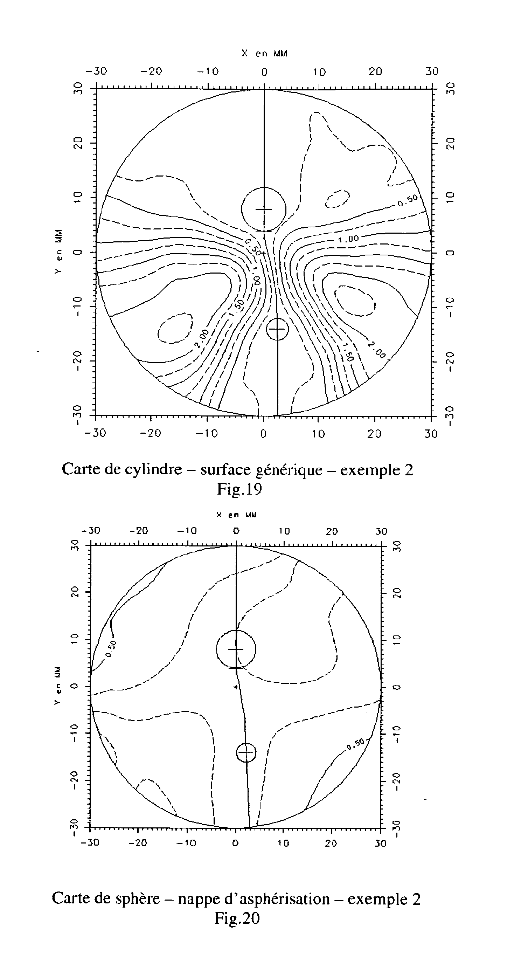

A l'étape 10 du procédé, une surface générique est choisie. Les figures 18 et 19 montrent des représentations graphiques des caractéristiques surfaciques de la surface générique, avec les mêmes conventions que les figures 4 à 5.

La comparaison des figures 16 et 18 d'une part et 17 et 19 d'autre part montrent bien que la surface générique choisie n'est pas la surface avant du verre semi-fini. Cela illustre le fait que le procédé est mis en oeuvre indépendamment de la surface avant du verre semi-fini.

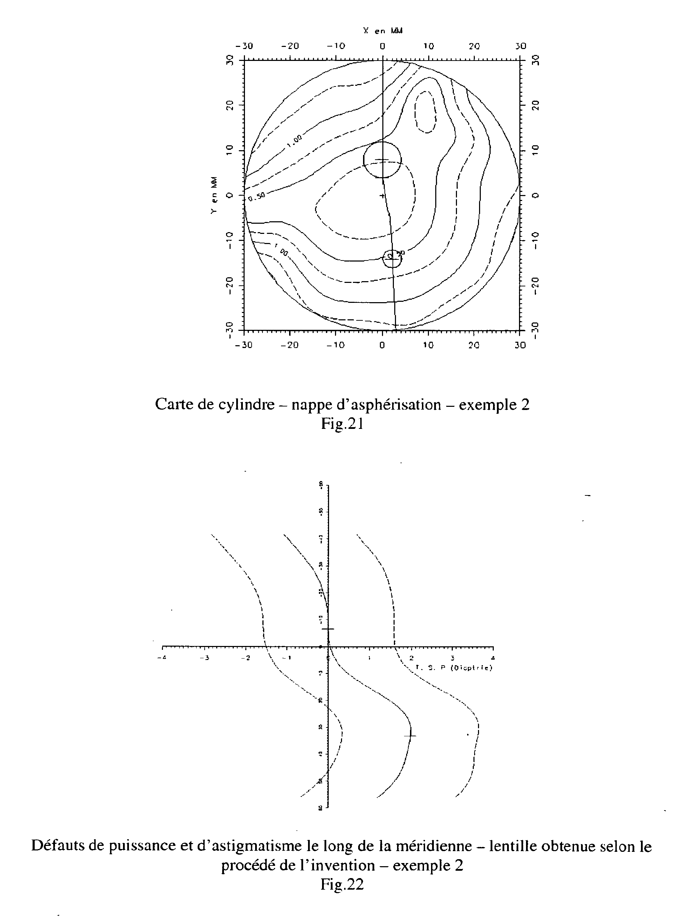

A l'issue du calcul, à l'étape 50, une nappe d'asphérisation est obtenue. Les figures 20 et 21 montrent des représentations graphiques des caractéristiques surfaciques de la nappe d'asphérisation, avec les mêmes conventions que précédemment.

L'équation de la surface arrière de la lentille ophtalmique multifocale peut alors être obtenue à l'étape 110 du procédé. La lentille peut alors être obtenue par usinage de la surface arrière du verre semi-fini fourni.

Les caractéristiques optiques présentées ensuite dans les figures 22 à 27 ont été obtenues par le calcul. Les figures 22 à 24 montrent des représentations graphiques des caractéristiques optiques d'une lentille obtenue selon le procédé de l'invention. Les figures 22 à 24 montrent des représentations graphiques analogues à celles des figures 10 à 12, avec les mêmes conventions.

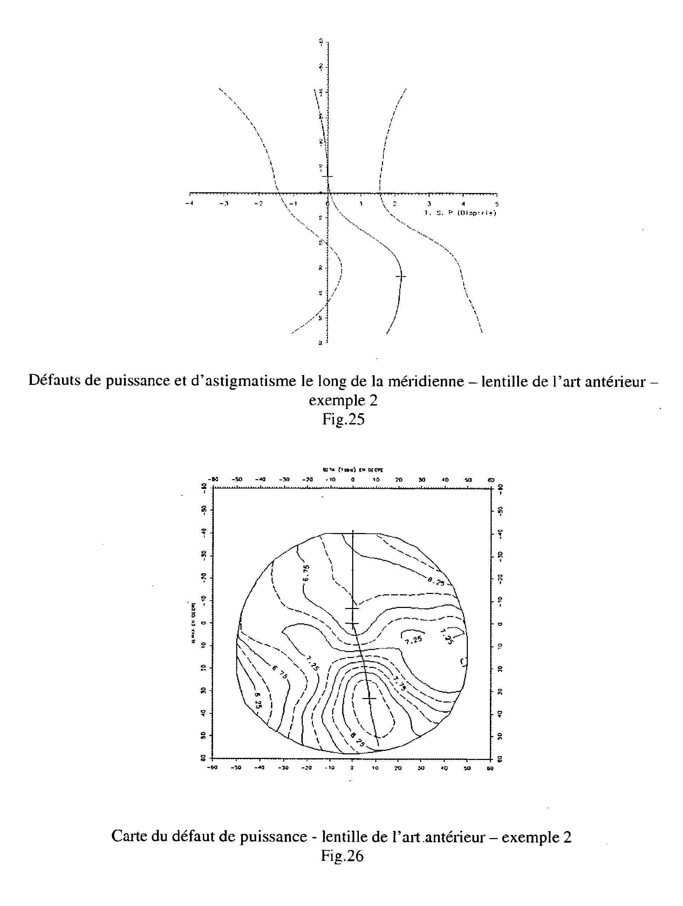

Les figures 25 à 27 montrent des représentations graphiques des caractéristiques optiques d'une lentille de l'art antérieur. La lentille de l'art antérieur est une lentille dans laquelle la surface arrière porte un tore et la surface avant est la surface avant du verre semi-fini. Les figures 25 à 27 montrent des représentations graphiques analogues à celles des figures 13 à 15, avec les mêmes conventions.

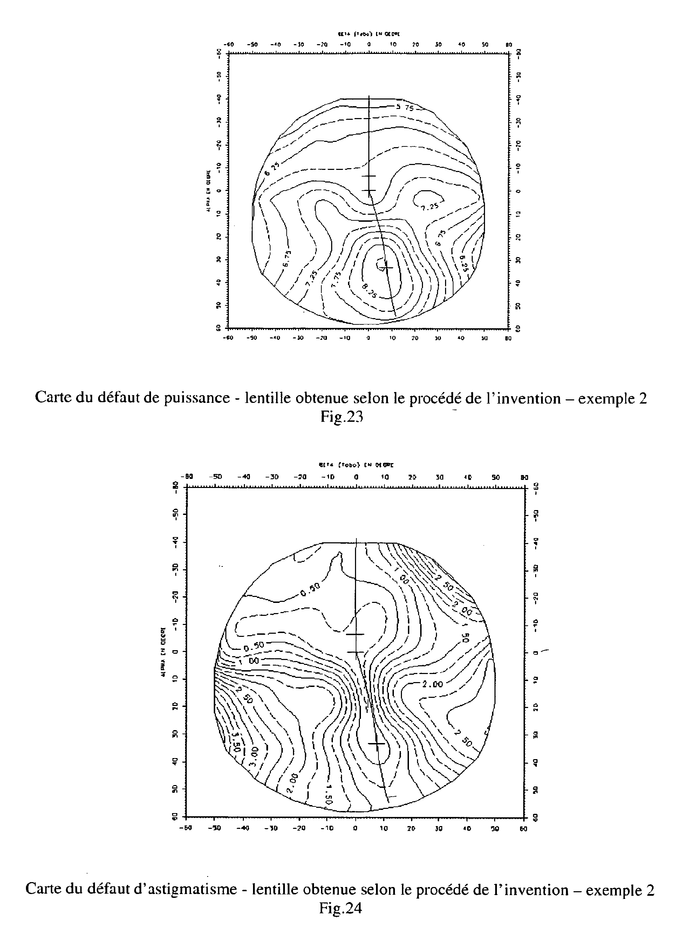

Dans le cas de la lentille obtenue par le procédé de l'invention, la comparaison des résultats montre que l'astigmatisme est réduit le long de la méridienne. En outre, les lignes d'isoastigmatisme de la lentille obtenue par le procédé de l'invention (figure 24) sont plus dégagées en vision de loin et en vision de près que celles de la lentille de l'art antérieur (figure 27).

Exemple 3

Le cas d'un verre unifocal est maintenant considéré.

Dans cet exemple, on cherche à obtenir une lentille unifocale pour la prescription suivante :

- sphère prescrite : 0 dioptries,
- cylindre prescrit : -3 dioptries,
- axe de 45°

Les conditions de port de la lentille unifocale pour cette prescription sont des conditions de port standard.

Un verre semi-fini est fourni. L'indice du verre semi-fini est connu ou mesuré. Il vaut 1,591. De même, la base du verre semi-fini est connue et vaut 4 dioptries.

On cherche à déterminer la surface arrière de la lentille unifocale pour répondre à la prescription précédente.

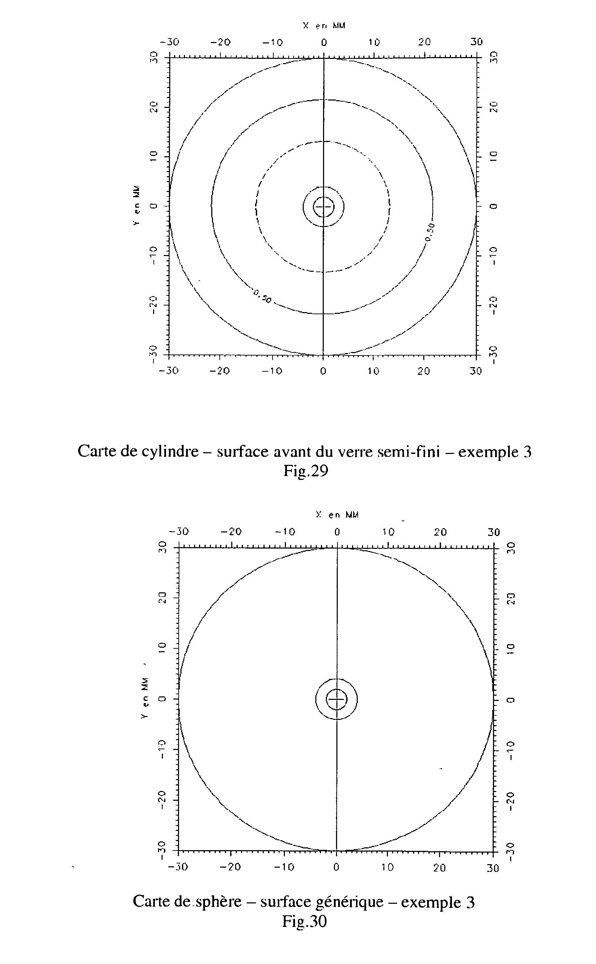

Afin de pouvoir effectuer des comparaisons sur la lentille une fois finie, on utilise un verre semi-fini dont la surface avant est connue. Les figures 28 et 29 montrent des représentations graphiques des caractéristiques surfaciques de la surface avant du verre semi-fini, avec les mêmes conventions que précédemment.

Le procédé de détermination est mis en oeuvre sans prendre en compte la surface avant du verre semi-fini. Pour le procédé de détermination, la surface avant du verre semi-fini est inconnue.

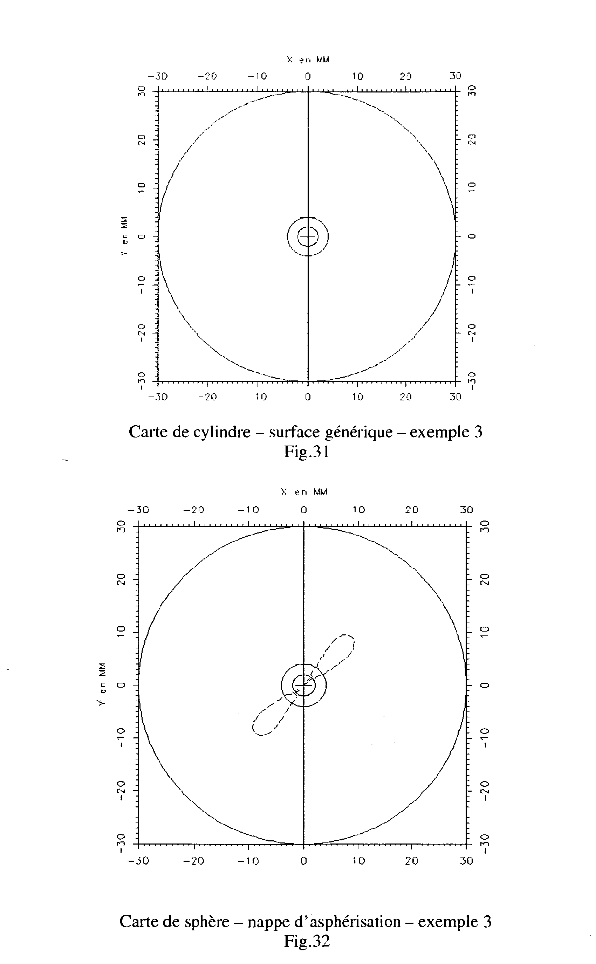

A l'étape 10 du procédé, une surface générique est choisie. Les figures 30 et 31 montrent des représentations graphiques des caractéristiques surfaciques de la surface générique, avec les mêmes conventions que précédemment. Comme la surface générique choisie dans le cas de l'exemple 3 est une sphère, la valeur de la sphère est constante et la valeur du cylindre est nul.

La comparaison des figures 28 et 30 d'une part et 29 et 31 d'autre part montrent bien que la surface générique choisie n'est pas la surface avant du verre semi-fini. Cela illustre le fait que le procédé est mis en oeuvre indépendamment de la surface avant du verre semi-fini.

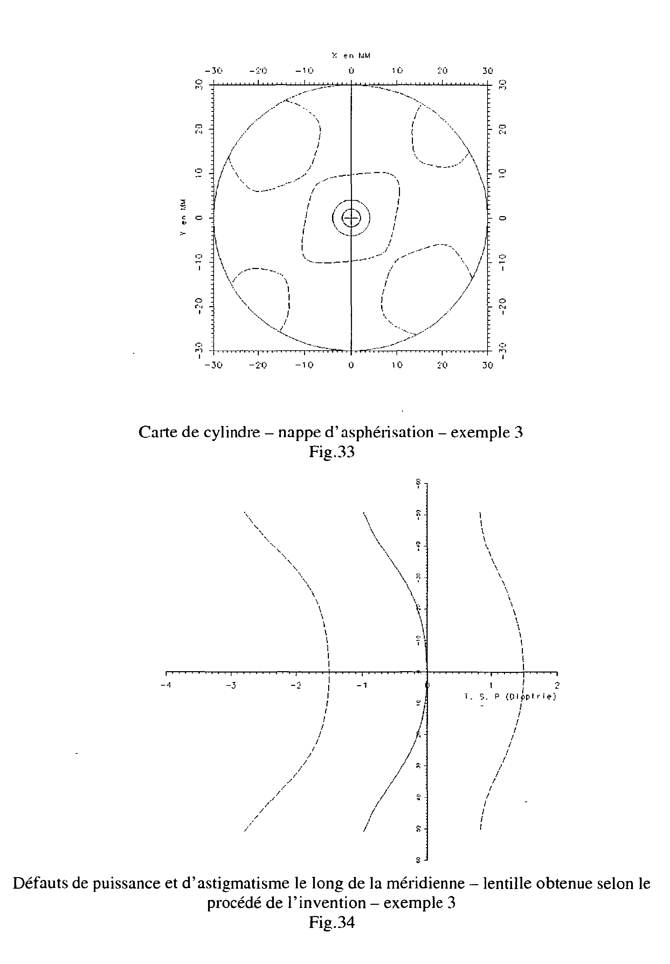

A l'issue du calcul, à l'étape 50, une nappe d'asphérisation est obtenue. Les figures 32 et 33 montrent des représentations graphiques des caractéristiques surfaciques de la nappe d'asphérisation, avec les mêmes conventions que précédemment.

L'équation de la surface arrière de la lentille ophtalmique unifocale peut alors être obtenue à l'étape 110 du procédé. La lentille peut alors être obtenue par usinage de la surface arrière du verre semi-fini fourni.

Les caractéristiques optiques présentées ensuite dans les figures 34 à 39 ont été obtenues par calcul. Les figures 34 à 36 montrent des représentations graphiques des caractéristiques optiques d'une lentille obtenue selon le procédé de l'invention. Les figures 34 à 36 montrent des représentations graphiques analogues à celles des figures 13 à 15, avec les mêmes conventions.

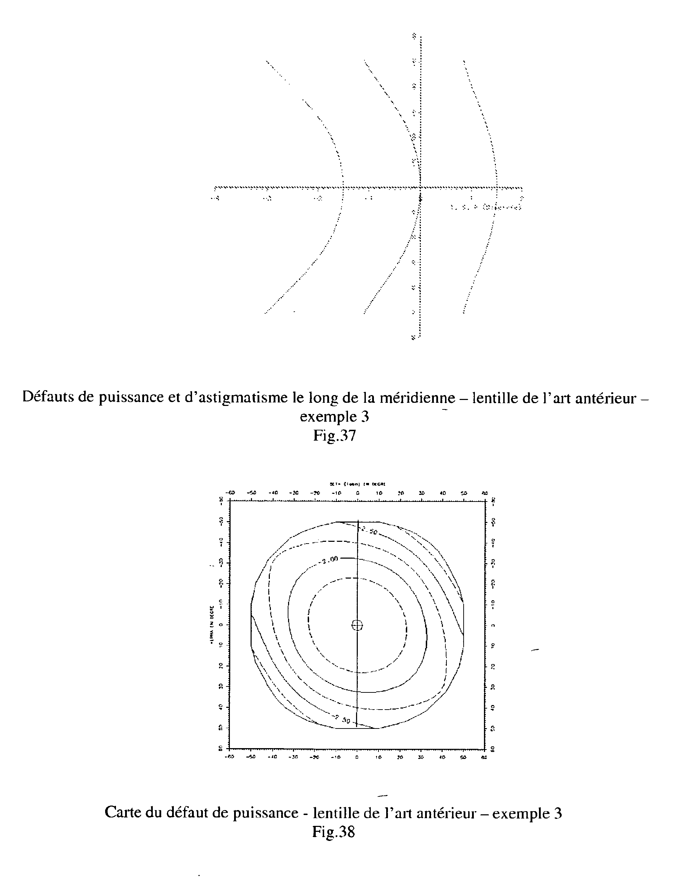

Les figures 37 à 39 montrent des représentations graphiques des caractéristiques optiques d'une lentille de l'art antérieur. La lentille de l'art antérieur est une lentille dans laquelle la surface arrière porte un tore simple et la surface avant est la surface avant du verre semi-fini. Les figures 37 à 39 montrent des représentations graphiques analogues à celles des figures 10 à 12, avec les mêmes conventions.

La comparaison des figures 34 à 39 montre qu'en puissance, les champs sont plus dégagés et que la lentille obtenue par le procédé de l'invention présente des gradients plus faibles. Un gradient de puissance est le taux de variation de puissance par unité de direction du regard. Concernant l'astigmatisme, les lignes d'isoastigmatisme sont plus symétriques pour la lentille obtenue par le procédé.

Exemple 4

Dans cet exemple, on cherche à obtenir une lentille multifocale progressive pour la prescription suivante :

- sphère prescrite : 2 dioptries,
- cylindre prescrit : 0 dioptries,
- axe de 0°,
- addition : 2 dioptries.

De plus, les conditions de port de la lentille multifocale pour cette prescription sont des conditions de port personnalisées :

- angle pantoscopique : 8°,
- galbe : 15°,
- distance verre-oeil :12 mm.

Un verre semi-fini est fourni. L'indice du verre semi-fini est connu ou mesuré. Il vaut 1,665. De même, la base du verre semi-fini est connue et vaut 5,25 dioptries. On cherche à déterminer la surface arrière de la lentille unifocale pour répondre à la prescription précédente.

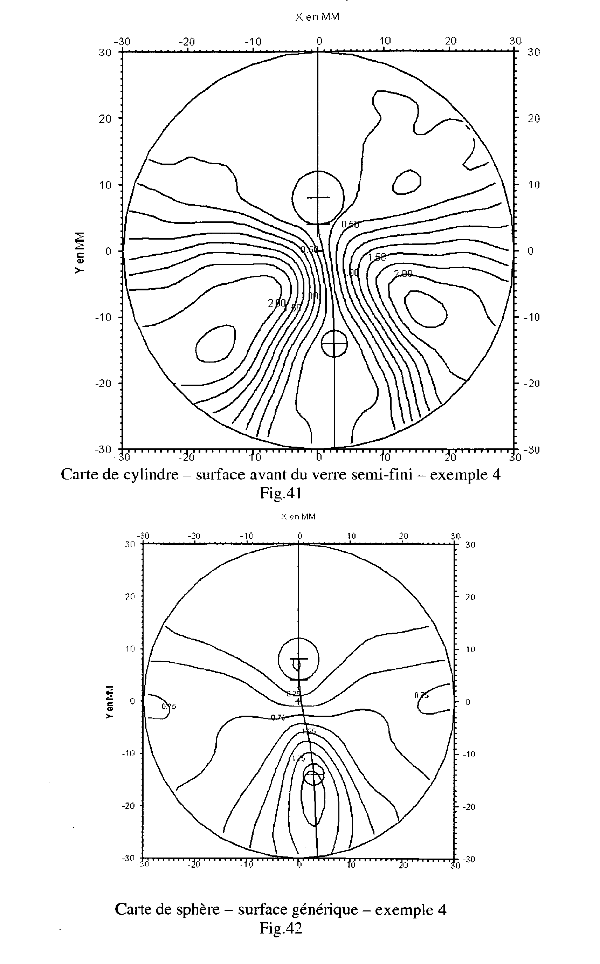

Afin de pouvoir effectuer des comparaisons sur la lentille une fois finie, on utilise un verre semi-fini dont la surface avant est connue. Les figures 40 et 41 montrent des représentations graphiques des caractéristiques surfaciques de la surface avant du verre semi-fini, avec les mêmes conventions que les figures 4 à 5.

Le procédé de détermination est mis en oeuvre sans prendre en compte la surface avant du verre semi-fini. Pour le procédé de détermination, la surface avant du verre semi-fini est inconnue.

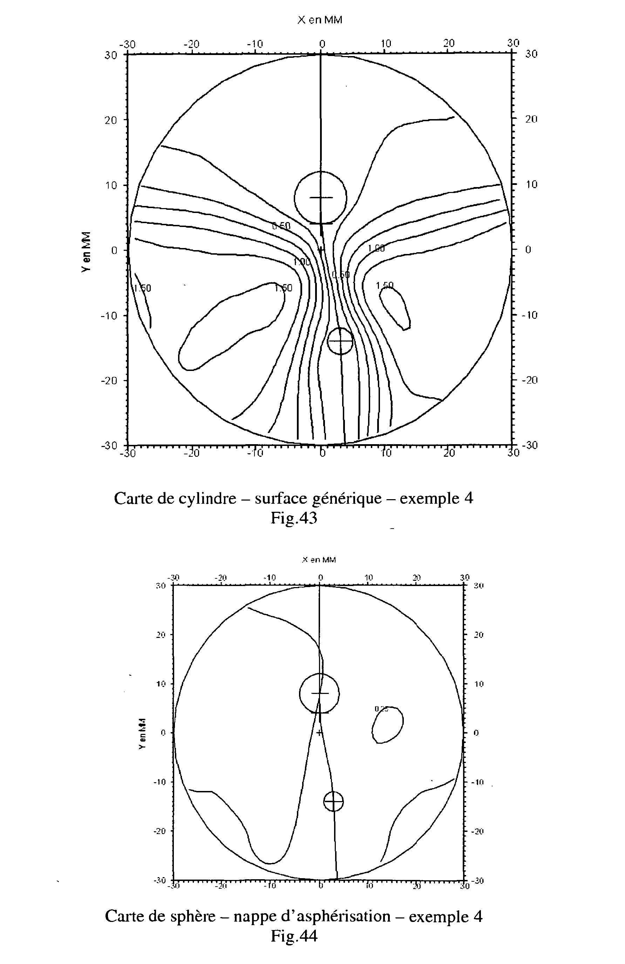

A l'étape 10 du procédé, une surface générique est choisie. Les figures 42 et 43 montrent des représentations graphiques des caractéristiques surfaciques de la surface générique, avec les mêmes conventions que les figures 4 à 5.

La comparaison des figures 40 et 42 d'une part et 41 et 43 d'autre part montrent bien que la surface générique choisie n'est pas la surface avant du verre semi-fini. Cela illustre le fait que le procédé est mis en oeuvre indépendamment de la surface avant du verre semi-fini.

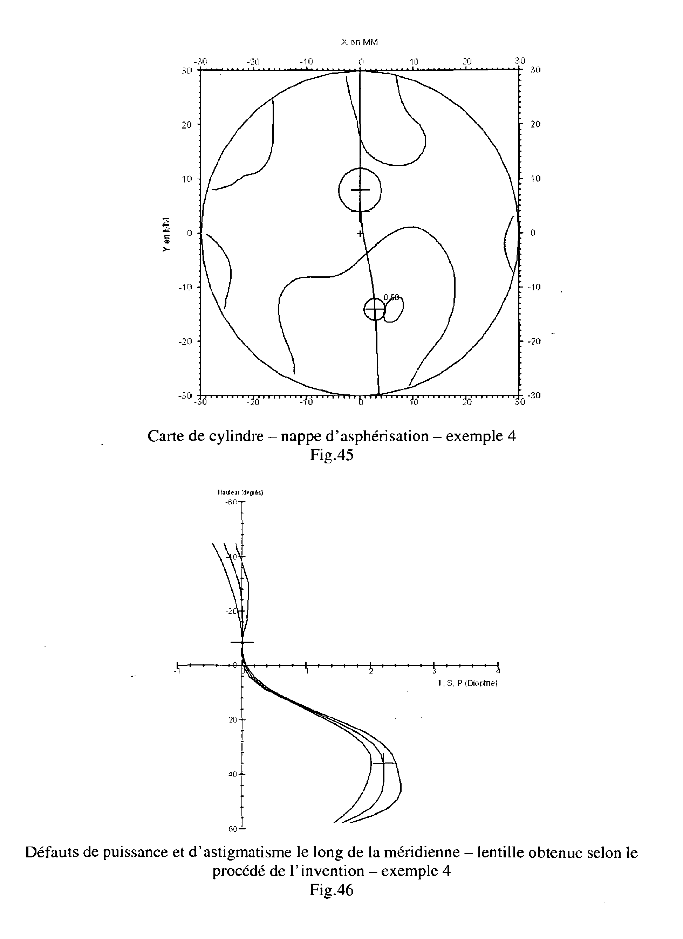

A l'issue du calcul, à l'étape 50, une nappe d'asphérisation est obtenue. Les figures 44 et 45 montrent des représentations graphiques des caractéristiques surfaciques de la nappe d'asphérisation, avec les mêmes conventions que précédemment.

L'équation de la surface arrière de la lentille ophtalmique multifocale peut alors être obtenue à l'étape 110 du procédé. La lentille peut alors être obtenue par usinage de la surface arrière du verre semi-fini fourni.

Les caractéristiques optiques présentées ensuite dans les figures 46 à 51 ont été obtenues par le calcul. Les figures 46 à 48 montrent des représentations graphiques des caractéristiques optiques d'une lentille obtenue selon le procédé de l'invention. Les figures 46 à 48 montrent des représentations graphiques analogues à celles des figures 10 à 12, avec les mêmes conventions.

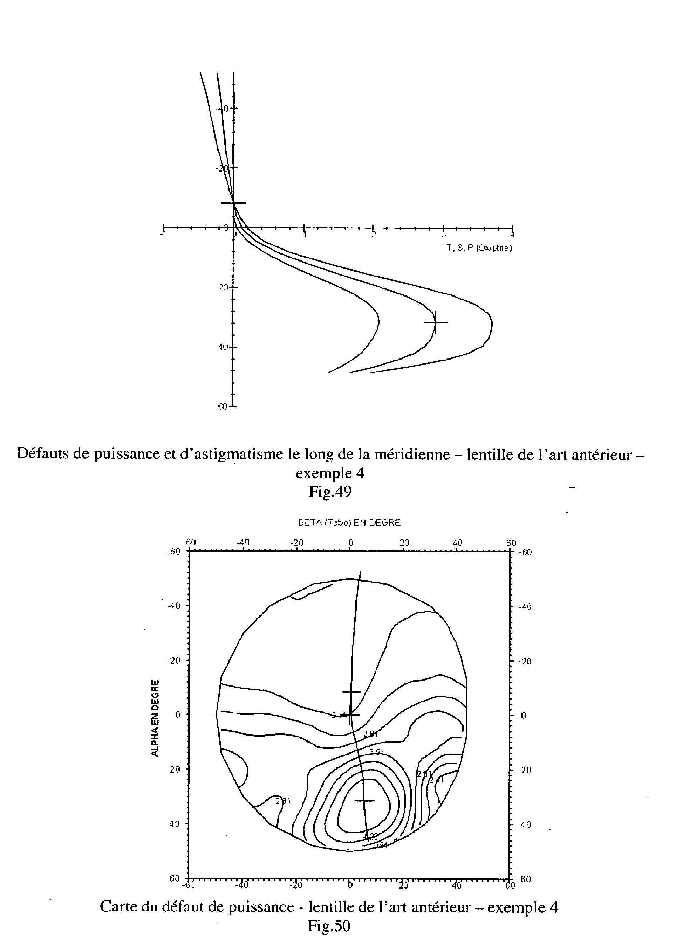

Les figures 49 à 51 montrent des représentations graphiques des caractéristiques optiques d'une lentille de l'art antérieur. La lentille de l'art antérieur est une lentille dans laquelle la surface arrière porte une sphère et la surface avant est la surface avant du verre semi-fini. Les figures 49 à 51 montrent des représentations graphiques analogues à celles des figures 13 à 15, avec les mêmes conventions.

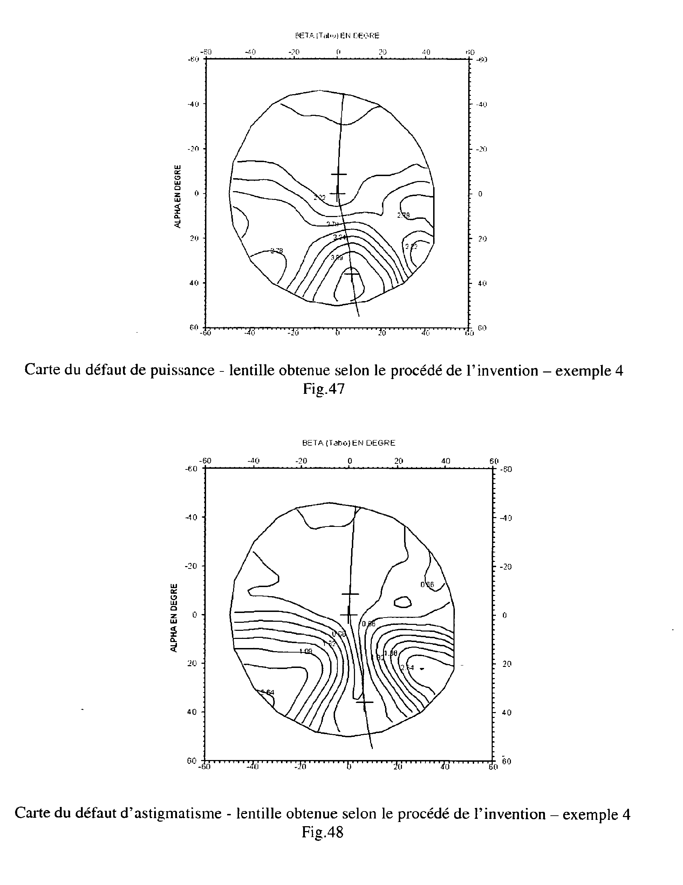

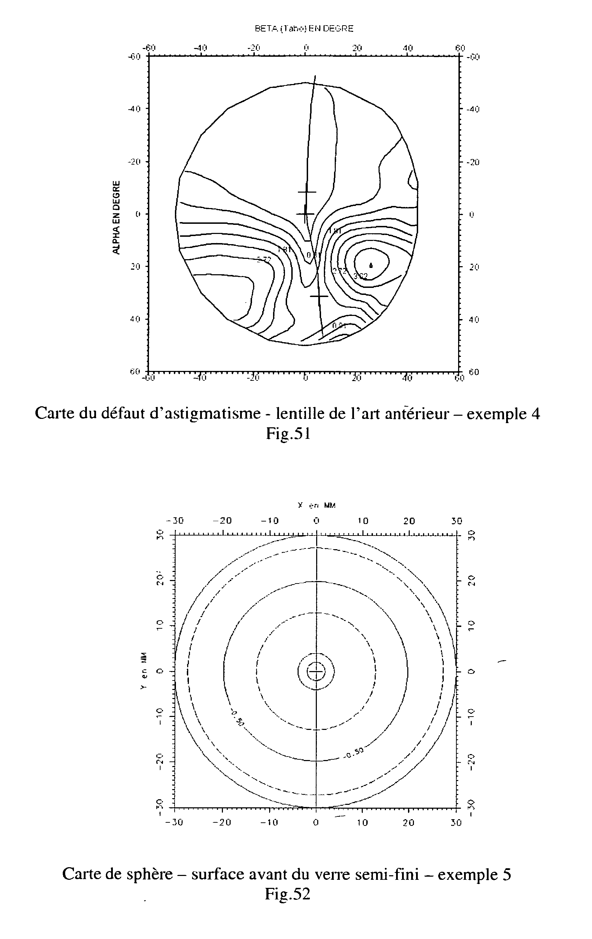

La comparaison des figures 46 à 51 montre qu'en puissance, les champs sont plus dégagés et que la lentille obtenue par le procédé de l'invention présente des gradients plus faibles. De plus, dans le cas de la lentille obtenue par le procédé de l'invention, la comparaison des résultats avec montre que l'astigmatisme est réduit le long de la méridienne. En outre, les lignes d'isoastigmatisme de la lentille obtenue par le procédé de l'invention (figure 48) sont plus dégagées en vision de loin et en vision de près que celles de la lentille de l'art antérieur (figure 51).

Exemple 5

Le cas d'un verre unifocal est maintenant considéré.

Dans cet exemple, on cherche à obtenir une lentille unifocale pour la prescription suivante :

- sphère prescrite : 2 dioptries,
- cylindre prescrit : 0 dioptries,
- axe de 0°.

De plus, les conditions de port de la lentille unifocale pour cette prescription sont des conditions de port personnalisées :

- angle pantoscopique : 8°,
- galbe : 15°,
- distance verre-oeil : 27 mm.

Un verre semi-fini est fourni. L'indice du verre semi-fini est connu ou mesuré. Il vaut 1,591. De même, la base du verre semi-fini est connue et vaut 4 dioptries. On cherche à déterminer la surface arrière de la lentille unifocale pour répondre à la prescription précédente.

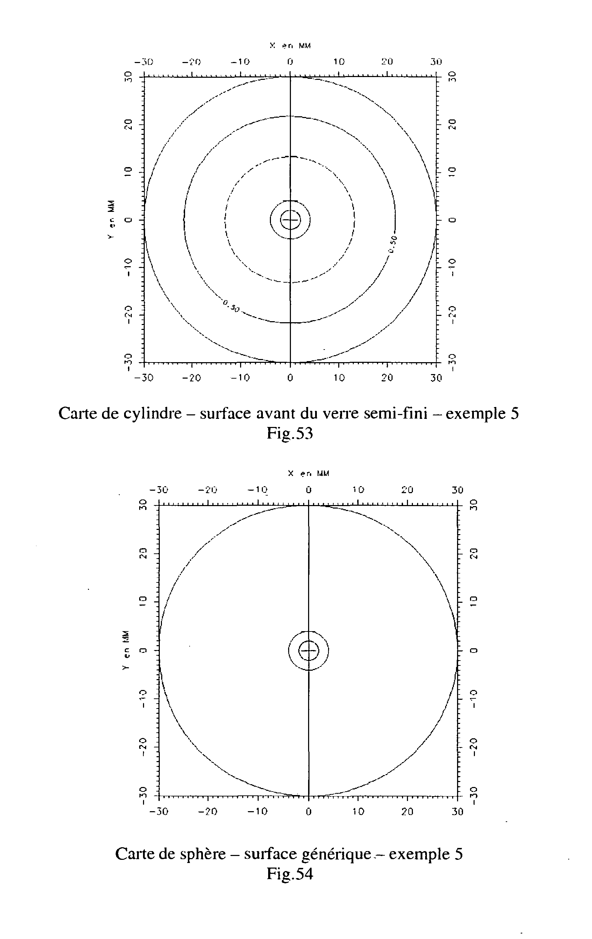

Afin de pouvoir effectuer des comparaisons sur la lentille une fois finie, on utilise un verre semi-fini dont la surface avant est connue. Les figures 52 et 53 montrent des représentations graphiques des caractéristiques surfaciques de la surface avant du verre semi-fini, avec les mêmes conventions que les figures 4 à 5.

Le procédé de détermination est mis en oeuvre sans prendre en compte la surface avant du verre semi-fini. Pour le procédé de détermination, la surface avant du verre semi-fini est inconnue.

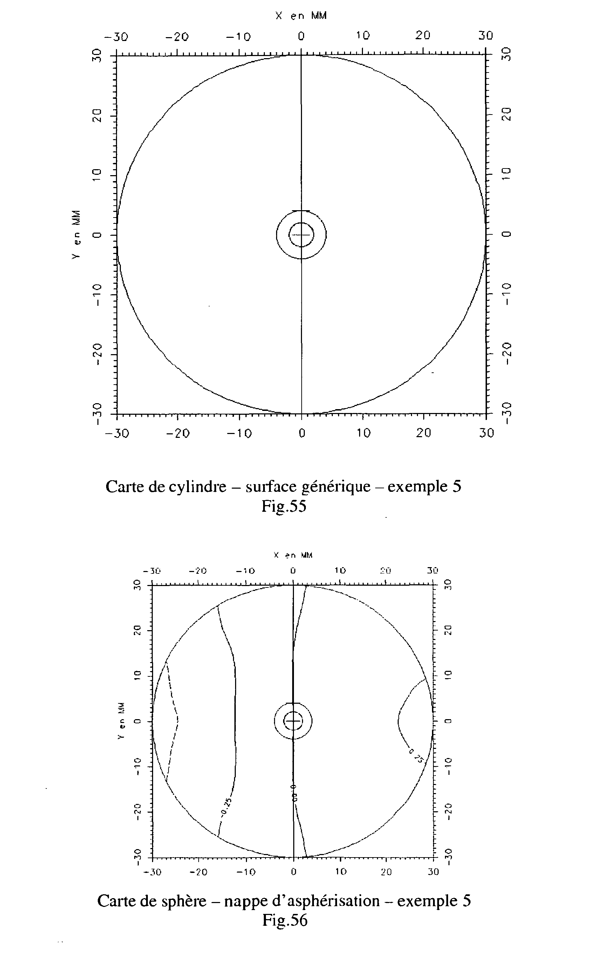

A l'étape 10 du procédé, une surface générique est choisie. Les figures 54 et 55 montrent des représentations graphiques des caractéristiques surfaciques de la surface générique, avec les mêmes conventions que les figures 4 à 5.

La comparaison des figures 52 et 54 d'une part et 53 et 55 d'autre part montrent bien que la surface générique choisie n'est pas la surface avant du verre semi-fini. Cela illustre le fait que le procédé est mis en oeuvre indépendamment de la surface avant du verre semi-fini.

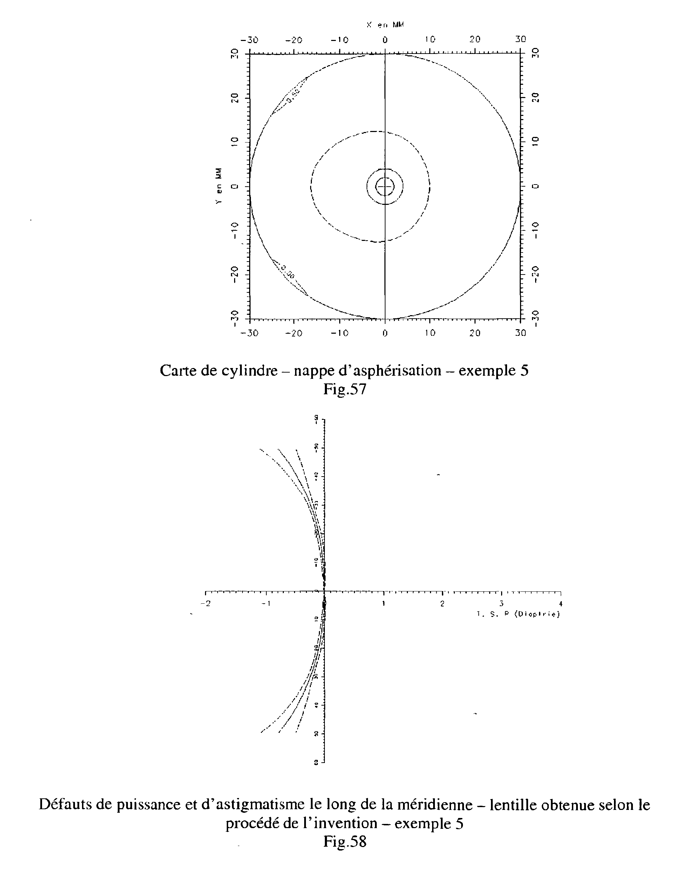

A l'issue du calcul, à l'étape 50, une nappe d'asphérisation est obtenue. Les figures 56 et 57 montrent des représentations graphiques des caractéristiques surfaciques de la nappe d'asphérisation, avec les mêmes conventions que précédemment.

L'équation de la surface arrière de la lentille ophtalmique multifocale peut alors être obtenue à l'étape 110 du procédé. La lentille peut alors être obtenue par usinage de la surface arrière du verre semi-fini fourni.

Les caractéristiques optiques présentées ensuite dans les figures 58 à 63 ont été obtenues par le calcul. Les figures 58 à 60 montrent des représentations graphiques des caractéristiques optiques d'une lentille obtenue selon le procédé de l'invention. Les figures 58 à 60 montrent des représentations graphiques analogues à celles des figures 10 à 12, avec les mêmes conventions.

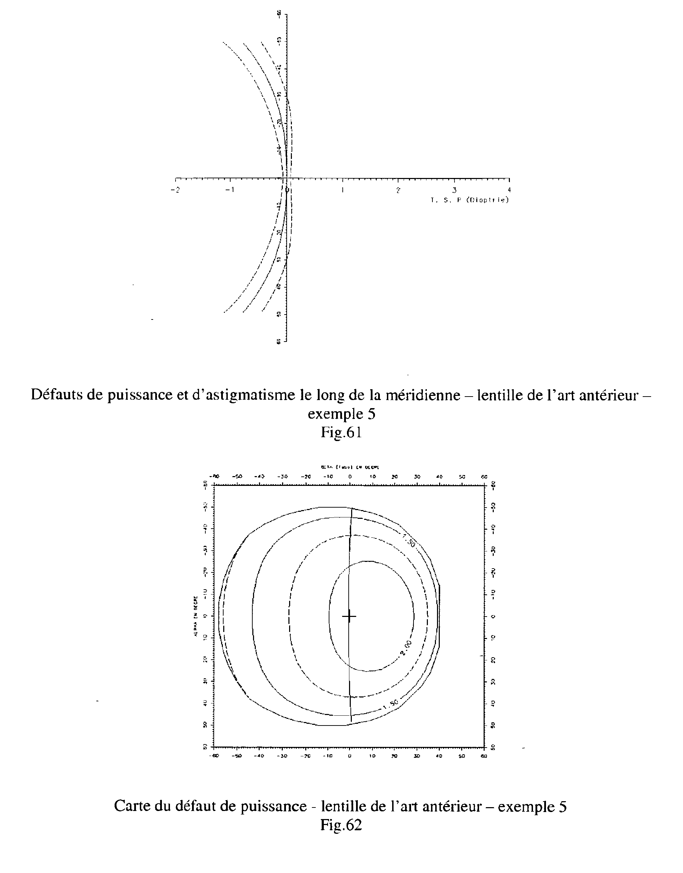

Les figures 61 à 63 montrent des représentations graphiques des caractéristiques optiques d'une lentille de l'art antérieur. La lentille de l'art antérieur est une lentille dans laquelle la surface arrière porte une sphère et la surface avant est la surface avant du verre semi-fini. Les figures 61 à 63 montrent des représentations graphiques analogues à celles des figures 13 à 15, avec les mêmes conventions.

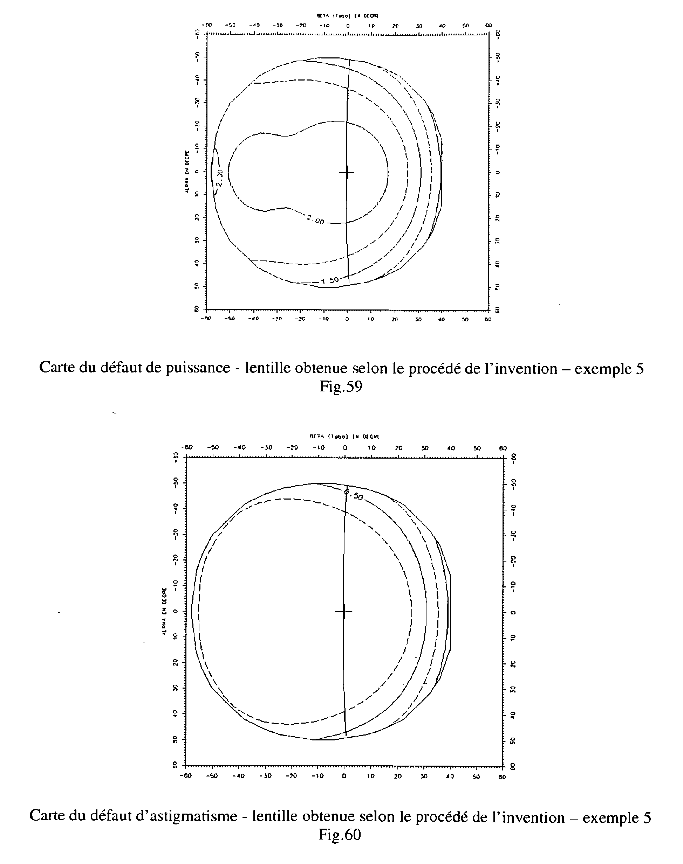

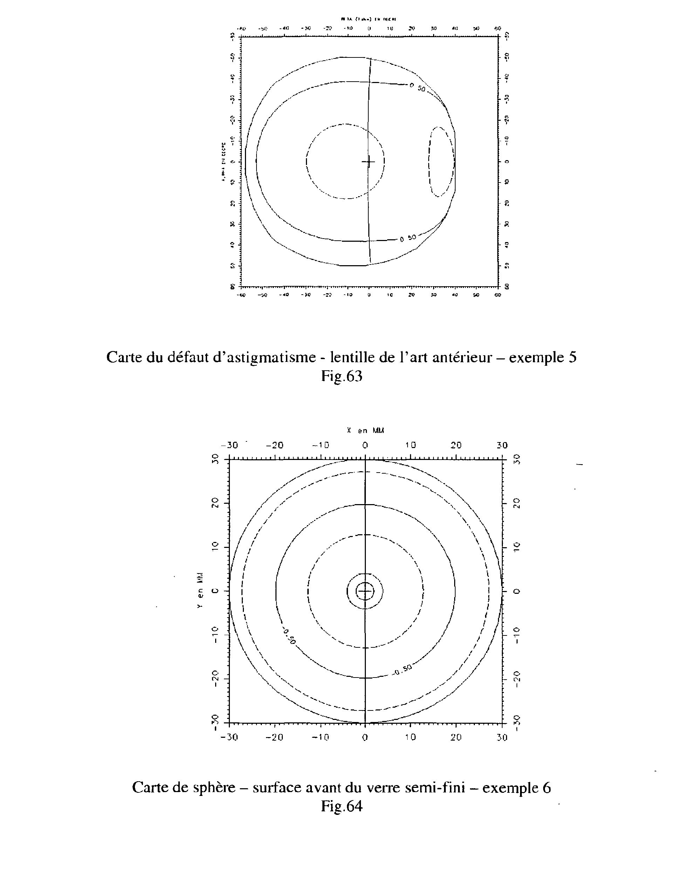

La comparaison des figures 58 à 63 montre qu'en puissance, les champs sont plus dégagés. De plus, dans le cas de la lentille obtenue par le procédé de l'invention, la comparaison des résultats avec montre que l'astigmatisme est réduit le long de la méridienne. En outre, les lignes d'isoastigmatisme de la lentille obtenue par le procédé de l'invention (figure 60) sont plus dégagées que celles de la lentille de l'art antérieur (figure 63).

Exemple 6

Dans cet exemple, on cherche à obtenir une lentille unifocale pour la prescription suivante :

- sphère prescrite : 2 dioptries,
- cylindre prescrit : 2 dioptries,
- axe de 45°.

De plus, les conditions de port de la lentille unifocale pour cette prescription sont des conditions de port personnalisées :

- angle pantoscopique : 8°,
- galbe : 15°,
- distance verre-oeil : 27 mm.

Un verre semi-fini est fourni. L'indice du verre semi-fini est connu ou mesuré. Il vaut 1,591. De même, la base du verre semi-fini est connue et vaut 4 dioptries. On cherche à déterminer la surface arrière de la lentille unifocale pour répondre à la prescription précédente.

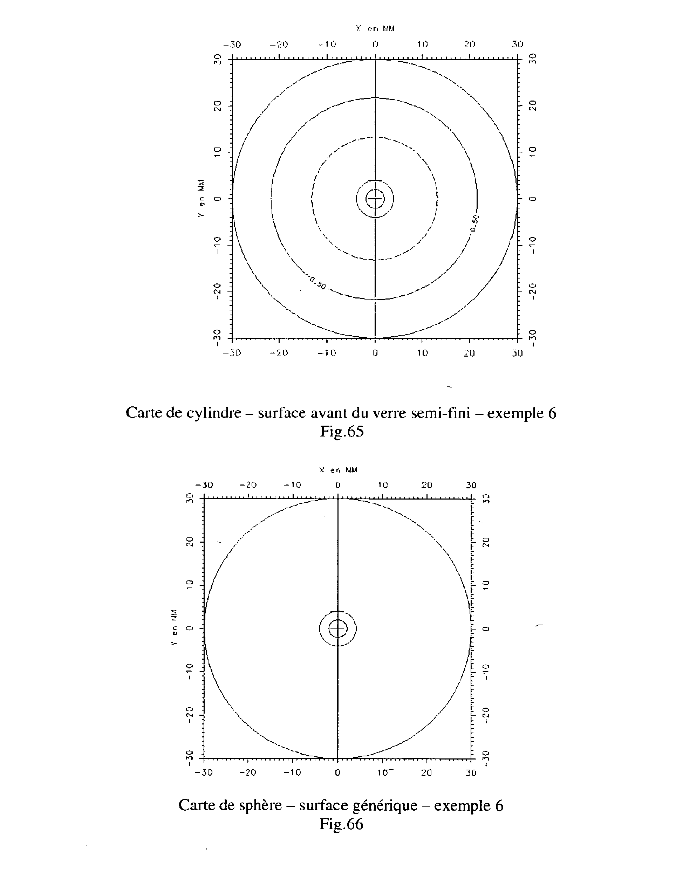

Afin de pouvoir effectuer des comparaisons sur la lentille une fois finie, on utilise un verre semi-fini dont la surface avant est connue. Les figures 64 et 65 montrent des représentations graphiques des caractéristiques surfaciques de la surface avant du verre semi-fini, avec les mêmes conventions que les figures 4 à 5.

Le procédé de détermination est mis en oeuvre sans prendre en compte la surface avant du verre semi-fini. Pour le procédé de détermination, la surface avant du verre semi-fini est inconnue.

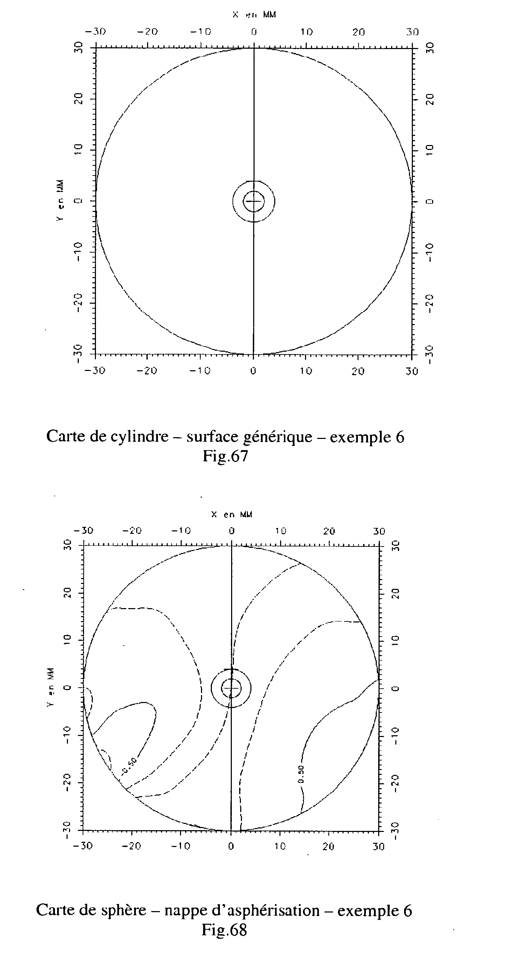

A l'étape 10 du procédé, une surface générique est choisie. Les figures 66 et 67 montrent des représentations graphiques des caractéristiques surfaciques de la surface générique, avec les mêmes conventions que les figures 4 à 5.

La comparaison des figures 64 et 66 d'une part et 65 et 67 d'autre part montrent bien que la surface générique choisie n'est pas la surface avant du verre semi-fini. Cela illustre le fait que le procédé est mis en oeuvre indépendamment de la surface avant du verre semi-fini.

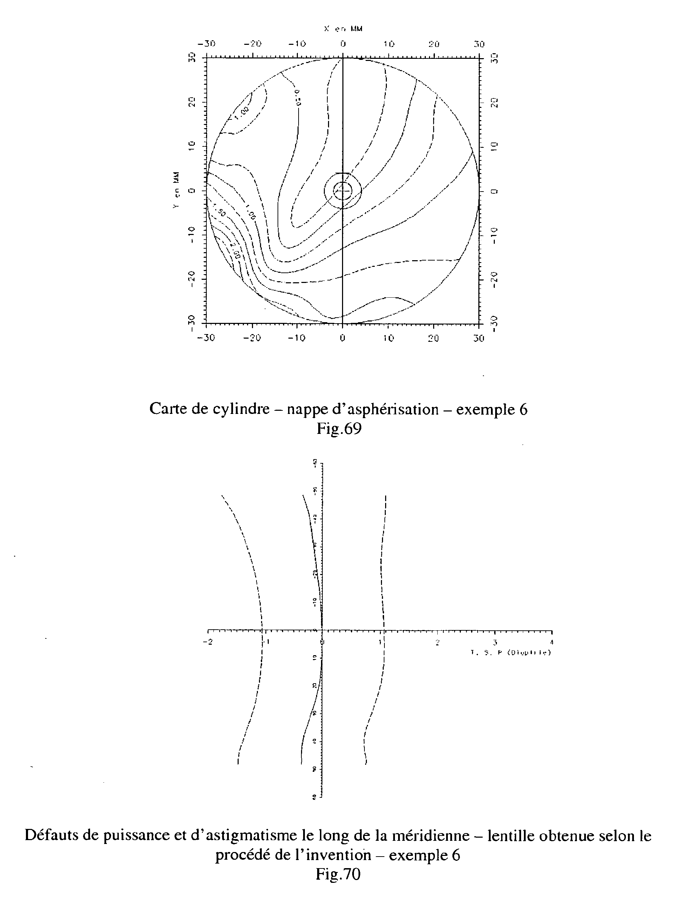

A l'issue du calcul, à l'étape 50, une nappe d'asphérisation est obtenue. Les figures 68 et 69 montrent des représentations graphiques des caractéristiques surfaciques de la nappe d'asphérisation, avec les mêmes conventions que précédemment.

L'équation de la surface arrière de la lentille ophtalmique multifocale peut alors être obtenue à l'étape 110 du procédé. La lentille peut alors être obtenue par usinage de la surface arrière du verre semi-fini fourni.

Les caractéristiques optiques présentées ensuite dans les figures 70 à 75 ont été obtenues par le calcul. Les figures 70 à 72 montrent des représentations graphiques des caractéristiques optiques d'une lentille obtenue selon le procédé de l'invention. Les figures 70 à 72 montrent des représentations graphiques analogues à celles des figures 10 à 12, avec les mêmes conventions.

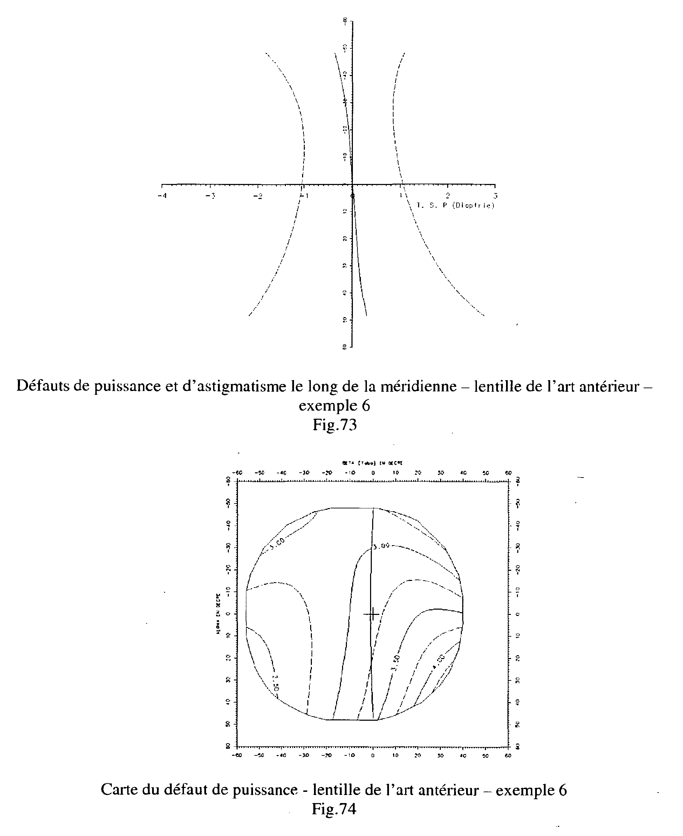

Les figures 73 à 75 montrent des représentations graphiques des caractéristiques optiques d'une lentille de l'art antérieur. La lentille de l'art antérieur est une lentille dans laquelle la surface arrière porte un tore et la surface avant est la surface avant du verre semi-fini. Les figures 73 à 75 montrent des représentations graphiques analogues à celles des figures 13 à 15, avec les mêmes conventions.

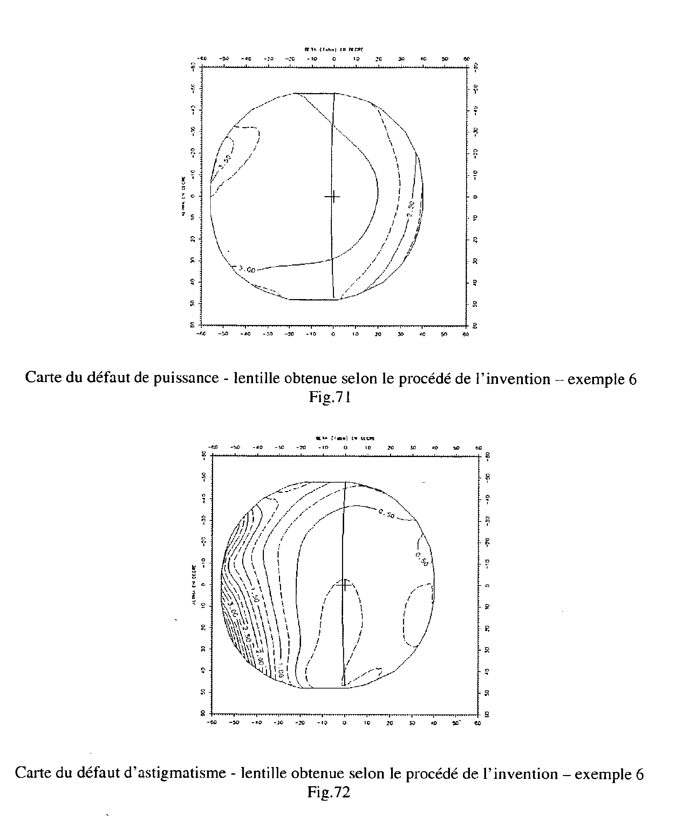

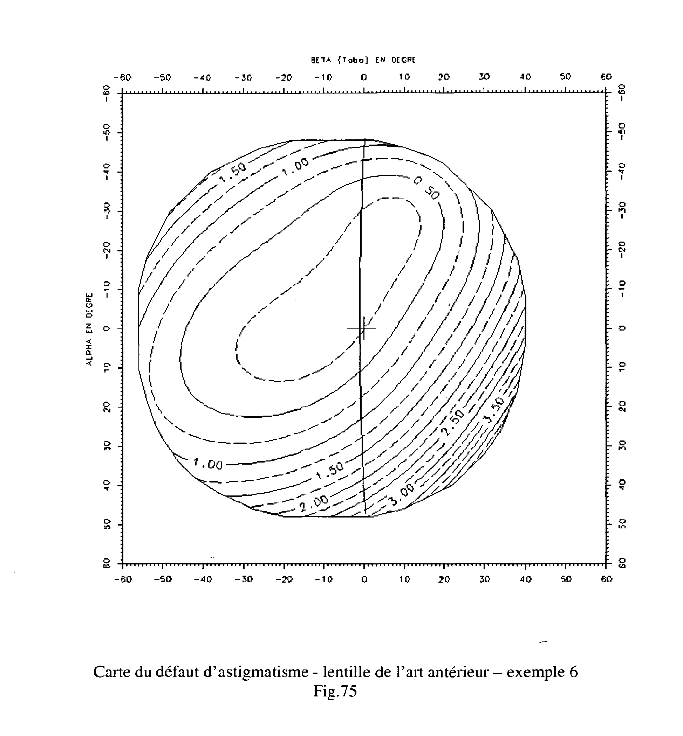

La comparaison des figures 70 à 75 montre qu'en puissance, les champs sont plus dégagés et que la lentille obtenue par le procédé de l'invention présente des gradients plus faibles. De plus, dans le cas de la lentille obtenue par le procédé de l'invention, la comparaison des résultats avec montre que l'astigmatisme est réduit le long de la méridienne. En outre, les lignes d'isoastigmatisme de la lentille obtenue par le procédé de l'invention (figure 72) sont plus dégagées que celles de la lentille de l'art antérieur (figure 75).

Le procédé de l'invention a ainsi permis d'optimiser une lentille ophtalmique présentant des défauts optiques contrôlés même lorsque la surface avant du verre semi-fini n'est pas connue, et notamment dans le cas de prescriptions astigmates ou de conditions de port particulières. Il en résulte un confort amélioré pour le porteur lorsque la lentille est usinée dans un laboratoire concurrent du fabricant.

**Revendications**

1. Un procédé de détermination, mis en oeuvre par des moyens informatiques, d'une lentille progressive pour un porteur auquel un astigmatisme (A), une puissance (P) et une addition (Add) ont été prescrits comprenant les étapes de :

   - fourniture d'un verre semi-fini progressif ayant une surface asphérique inconnue portée par la surface avant du verre semi-fini progressif, le verre semi-fini progressif ayant des informations connues comprenant la valeur d'indice dudit verre semi-fini, la valeur de base dudit verre semi-fini, l'addition dudit verre semi-fini et la longueur de progression dudit verre semi-fini,
   - détermination d'une lentille progressive où la lentille progressive déterminée a la surface avant du verre semi-fini et une surface arrière présentant une surface obtenue par la somme d'une nappe complexe d'asphérisation (N), définie comme une surface fictive complexe caractérisée en tout point par son altitude déterminée par optimisation et obtenue par un procédé de détermination d'une nappe d'asphérisation, et d'une surface simple (T) telle que la valeur de la puissance au point de référence soit égale à la puissance prescrite (P) et la valeur de l'astigmatisme au point de référence soit égale à l'astigmatisme prescrit (A),

   où le procédé de détermination d'une nappe d'asphérisation comprend les étapes de :

   - choix d'une surface générique ($S_G$) présentant des valeurs de sphère et de cylindre connues en chaque point, la surface générique étant choisie de sorte à avoir sensiblement des mêmes informations connues du verre semi-fini progressif;
   - création d'une lentille fictive cible ($L_C$) ayant :

     • une surface avant étant la surface générique ($S_G$), et
     • une surface arrière étant une première surface simple choisie parmi un tore ou une sphère,

   la lentille fictive cible ($L_C$) définissant des cibles optiques pour chaque direction du regard à partir de l'astigmatisme et/ou de la puissance prescrits au porteur ;
   - création d'une lentille fictive courante ($L_F$), la lentille fictive courante ($L_F$) étant initialement une lentille fictive initiale d'essai ($L_I$) ayant :

     • une surface avant étant la surface générique (SG), et
     • une surface arrière étant une deuxième surface simple choisie parmi un tore ou une sphère,

   - optimisation de la lentille fictive courante ($L_F$) en modulant la surface arrière pour atteindre les cibles optiques de la lentille fictive cible ($L_C$) pour chaque direction du regard ;
   - détermination de la nappe complexe d'asphérisation (N) correspondant à la surface arrière de la lentille fictive courante optimisée à laquelle est soustraite la surface arrière de la lentille fictive d'essai initiale.

2. Le procédé selon la revendication 1, dans lequel les cibles optiques de la lentille fictive de cible ($L_C$) sont définies dans les conditions de port standard.

3. Le procédé selon l'une des revendications 1 ou 2, dans lequel la lentille fictive courante ($L_F$) est positionnée dans des conditions de port standard lors de l'optimisation.

4. Le procédé selon l'une des revendications 1 ou 2, dans lequel la lentille fictive courante ($L_F$) est positionnée dans des conditions de port personnalisées lors de l'optimisation.

**5.** Le procédé selon l'une des revendications 1 à 4, dans lequel la première surface simple est telle que la lentille fictive cible ($L_C$) présente :

- une valeur de puissance moyenne en un point de référence sensiblement égale à la somme de la puissance prescrite et de la moitié de l'astigmatisme prescrit, et
- une valeur de l'astigmatisme prescrit au point de référence sensiblement
nulle ;
et dans lequel la deuxième surface simple est telle que la lentille fictive initiale d'essai ($L_I$) présente :
- une valeur de la puissance moyenne en un point de référence sensiblement égale à la puissance prescrite, et
- une valeur d'astigmatisme au point de référence égale à l'astigmatisme prescrit.

**6.** Le procédé selon l'une des revendications 1 à 4, dans lequel la première surface simple est telle que la lentille fictive cible ($L_C$) présente :

- une valeur de puissance moyenne en un point de référence sensiblement égale à la puissance prescrite, et
- une valeur d'astigmatisme au point de référence sensiblement égale à
l'astigmatisme prescrit;

et dans lequel la deuxième surface simple est telle que la lentille fictive initiale d'essai ($L_I$) présente :

- une valeur de puissance moyenne en un point de référence sensiblement égale à la puissance prescrite, et
- une valeur d'astigmatisme au point de référence sensiblement égale à l'astigmatisme prescrit.

**7.** Le procédé selon l'une des revendications 1 à 6 comprenant en outre l'étape de fourniture de valeurs d'indice de verre et de base, pour la lentille fictive cible ($L_C$) et la lentille fictive initiale d'essai ($L_I$).

**8.** Le procédé selon la revendication 7, dans lequel l'étape de fourniture de valeurs d'indice de verre et de base est réalisée par la fourniture du verre semi-fini dont la surface asphérique est inconnue.

**9.** Le procédé selon l'une des revendications 1 à 8, dans lequel les cibles optiques de la lentille fictive de cible ($L_C$) sont choisies parmi des cibles de puissance, d'astigmatisme, d'astigmatisme résultant, de déviation prismatique, de distorsion ou une combinaison de celles-ci.

**10.** Le procédé selon l'une des revendications 1 à 9, dans lequel la lentille ophtalmique est une lentille progressive, le point de référence étant le point de contrôle en vision de loin.

**11.** Le procédé selon l'une quelconque des revendications précédentes dans lequel la surface générique ($S_G$) choisie présentant la même addition que le verre semi-fini progressif.

**12.** Le procédé selon l'une quelconque des revendications précédentes, dans lequel la surface générique ($S_G$) choisie présentant la même longueur de progression que le verre semi-fini progressif.

**Patentansprüche**

**1.** Durch Informatikmittel eingesetztes Verfahren zur Bestimmung eines Gleitsichtglases für einen Träger, dem ein Astigmatismus (A), eine Stärke (P) und eine Addition (Add) verschrieben wurden, umfassend die folgenden Schritte:

- Bereitstellung eines halbfertigen Gleitsichtglases mit einer unbekannten asphärischen Oberfläche, die von der vorderen Fläche des halbfertigen Gleitsichtglases getragen wird, wobei das halbfertige Gleitsichtglas bekannte Informationen hat, umfassend den Indexwert des halbfertigen Glases, den Basiswert des halbfertigen Glases, die Verstärkung des halbfertigen Glases und die Gleitsichtlänge des halbfertigen Glases,
- Bestimmung eines Gleitsichtglases, wobei das bestimmte Gleitsichtglas die vordere Fläche des halbfertigen Glases und eine hintere Fläche hat, die eine Oberfläche aufweist, die durch die Summe einer komplexen Asphärisierungsschicht (N), die als eine komplexe fiktive Fläche definiert ist, die an jedem Punkt durch ihre durch Optimierung bestimmte Höhe gekennzeichnet ist und durch ein Verfahren zur Bestimmung einer Asphärisierungsschicht erhalten wird, und einer derartigen einfachen Oberfläche (T) erhalten wird, dass der Wert der Stärke am Referenzpunkt gleich der vorgeschriebenen Stärke (P) und der Wert des Astigmatismus am Referenzpunkt gleich dem vorgeschriebenen Astigmatismus (A) ist,

wobei das Verfahren zur Bestimmung einer Asphärisierungsschicht die folgenden Schritte umfasst:

- Auswahl einer generischen Fläche ($S_G$), die Sphären- und Zylinderwerte aufweist, die an jedem Punkt bekannt sind, wobei die generische Fläche derart ausgewählt ist, dass im Wesentlichen dieselben bekannten Informationen des halbfertigen Gleitsichtglases vorhanden sind;
- Erzeugung eines fiktiven Zielglases ($L_C$) mit:

  * als vordere Fläche die generische Fläche ($S_G$), und
  * als hintere Fläche eine erste einfache Fläche, die unter einem Torus oder einer Sphäre ausgewählt ist,

wobei das fiktive Zielglas ($L_C$) optische Ziele für jede Blickrichtung auf Basis des Astigmatismus und/oder der Stärke, die dem Träger vorgeschrieben sind, definiert;
- Erzeugung eines laufenden fiktiven Glases ($L_F$), wobei das laufende fiktive Glas ($L_F$) anfänglich ein fiktives Anfangstestglas ($L_I$) ist mit:

  * als vordere Fläche die generische Fläche (SG), und
  * als hintere Fläche eine zweite einfache Fläche, die unter einem Torus oder einer Sphäre ausgewählt ist,

- Optimierung des laufenden fiktiven Glases ($L_F$) durch Modulation der hinteren Fläche, um die optischen Ziele des fiktiven Zielglases ($L_C$) für jede Blickrichtung zu erreichen;
- Bestimmung der komplexen Asphärisierungsschicht (N) entsprechend der hinteren Fläche des optimierten laufenden fiktiven Glases, dem die hintere Fläche des fiktiven Anfangstestglases entzogen wird.

2. Verfahren nach Anspruch 1, bei dem die optischen Ziele des fiktiven Zielglases ($L_C$) unter den Standardtragebedingungen definiert werden.

3. Verfahren nach einem der Ansprüche 1 oder 2, bei dem das laufende fiktive Glas ($L_F$) unter Standardtragebedingungen bei der Optimierung positioniert wird.

4. Verfahren nach einem der Ansprüche 1 oder 2, bei dem das laufende fiktive Glas ($L_F$) unter personalisierten Tragebedingungen bei der Optimierung positioniert wird.

5. Verfahren nach einem der Ansprüche 1 bis 4, bei dem die erste einfache Fläche derart ist, dass das fiktive Zielglas ($L_C$) umfasst:

  - einen durchschnittlichen Stärkenwert an einem Referenzpunkt im Wesentlichen gleich der Summe der vorgeschriebenen Stärke und der Hälfte des vorgeschriebenen Astigmatismus, und
  - einen Wert des vorgeschriebenen Astigmatismus am Referenzpunkt im Wesentlichen gleich Null;

und bei dem die zweite einfache Fläche derart ist, dass das fiktive Anfangstestglas ($L_I$) umfasst:

  - einen durchschnittlichen Stärkenwert an einem Referenzpunkt im Wesentlichen gleich der vorgeschriebenen Stärke, und
  - einen Wert des Astigmatismus am Referenzpunkt gleich dem vorgeschriebenen Astigmatismus.

6. Verfahren nach einem der Ansprüche 1 bis 4, bei dem die erste einfache Fläche derart ist, dass das fiktive Zielglas ($L_C$) umfasst:

  - einen durchschnittlichen Stärkenwert an einem Referenzpunkt im Wesentlichen der vorgeschriebenen Stärke, und
  - einen Wert des Astigmatismus am Referenzpunkt im Wesentlichen gleich dem vorgeschriebenen Astigmatismus;

und bei dem die zweite einfache Fläche derart ist, dass das fiktive Anfangstestglas ($L_I$) umfasst:

- einen durchschnittlichen Stärkenwert an einem Referenzpunkt im Wesentlichen gleich der vorgeschriebenen Stärke, und

- einen Wert des Astigmatismus am Referenzpunkt im Wesentlichen gleich dem vorgeschriebenen Astigmatismus.

**7.** Verfahren nach einem der Ansprüche 1 bis 6, ferner umfassend den Schritt der Lieferung von Glas- und Basisindexwerten für das fiktive Zielglas ($L_C$) und das fiktive Anfangstestglas ($L_I$).

**8.** Verfahren nach Anspruch 7, bei dem der Schritt der Lieferung von Glas- und Basisindexwerten durch die Lieferung des halbfertigen Glases erfolgt, dessen asphärische Fläche unbekannt ist.

**9.** Verfahren nach einem der Ansprüche 1 bis 8, bei dem die optischen Ziele des fiktiven Zielglases ($L_C$) unter Zielen der Stärke, des Astigmatismus, des resultierenden Astigmatismus, der Prismenablenkung, der Verzerrung oder einer Kombination aus diesen ausgewählt sind.

**10.** Verfahren nach einem der Ansprüche 1 bis 9, bei dem das Brillenglas ein Gleitsichtglas ist, wobei der Referenzpunkt der Kontrollpunkt bei Weitsichtigkeit ist.

**11.** Verfahren nach einem der vorhergehenden Ansprüche, bei dem die ausgewählte generische Fläche ($S_G$) dieselbe Addition wie das halbfertige Gleitsichtglas aufweist.

**12.** Verfahren nach einem der vorhergehenden Ansprüche, bei dem die ausgewählte generische Fläche ($S_G$) dieselbe Gleitsichtlänge wir das halbfertige Gleitsichtglas aufweist.

## Claims

**1.** Method, implemented by computational means, for determining a progressive lens for a wearer to whom an astigmatism (A), a power (P) and an addition (Add) have been prescribed, comprising the steps of:

    - providing a progressive semifinished eyeglass having an unknown aspherical surface borne by the front surface of the progressive semifinished eyeglass, the progressive semifinished eyeglass having known items of information comprising the index value of said semifinished eyeglass, the base value of said semifinished eyeglass, the addition of said semifinished eyeglass and the progression length of said semifinished eyeglass; and

    - determining a progressive lens, in which the progressive lens determined has the front surface of the semifinished eyeglass and a back surface having a surface obtained by summation of a complex aspherization layer (N), defined as a complex model surface characterized at any point by its altitude determined by optimization and obtained by a method for determining an aspherization layer, and of a simple surface (T) such that the value of the power at the reference point is equal to the prescribed power (P) and the value of the astigmatism at the reference point is equal to the prescribed astigmatism (A);

in which the method for determining an aspherization layer comprises the steps of:

- choosing a generic surface ($S_G$) having at each point known values of sphere and cylinder, the generic surface being chosen so as to have substantially the same known items of information as the progressive semifinished eyeglass;

- creating a target model lens ($L_C$) having:

    • a front surface being the generic surface ($S_G$), and
    • a back surface being a first simple surface chosen from a torus or a sphere,

the target model lens ($L_C$) defining optical targets for each direction of the gaze on the basis of the astigmatism and/or power prescribed to the wearer;

    - creating a current model lens ($L_F$), the current model lens ($L_F$) initially being a trial initial model lens ($L_I$) having:

        • a front surface being the generic surface ($S_G$), and
        • a back surface being a second simple surface chosen from a torus or a sphere,

- optimizing the current model lens ($L_F$) by modulating the back surface to achieve the optical targets of the target model lens ($L_C$) for each direction of the gaze; and
- determining the complex aspherization layer (N) corresponding to the back surface of the optimized current model lens from which the back surface of the trial initial model lens is subtracted.

**2.** Method according to Claim 1, in which the optical targets of the target model lens ($L_C$) are defined under standard wear conditions.

**3.** Method according to either of Claims 1 and 2, in which the current model lens ($L_F$) is positioned under standard wear conditions during the optimization.

**4.** Method according to either of Claims 1 and 2, in which the current model lens ($L_F$) is positioned under personalized wear conditions during the optimization.

**5.** Method according to one of Claims 1 to 4, in which the first simple surface is such that the target model lens ($L_C$) has:

- an mean power value at a reference point substantially equal to the sum of the prescribed power and half the prescribed astigmatism; and
- a substantially zero value of prescribed astigmatism at the reference point;

and in which the second simple surface is such that the trial initial model lens ($L_I$) has:

- a value of mean power at a reference point substantially equal to the prescribed power; and
- an astigmatism value at the reference point equal to the prescribed astigmatism.

**6.** Method according to one of Claims 1 to 4, in which the first simple surface is such that the target model lens ($L_C$) has:

- a mean power value at a reference point substantially equal to the prescribed power; and
- an astigmatism value at the reference point substantially equal to the prescribed astigmatism;

and in which the second simple surface is such that the trial initial model lens ($L_I$) has:

- a mean power value at a reference point substantially equal to the prescribed power; and
- an astigmatism value at the reference point substantially equal to the prescribed astigmatism.

**7.** Method according to one of Claims 1 to 6, furthermore comprising the step of providing values of base and eyeglass index, for the target model lens ($L_C$) and the trial initial model lens ($L_I$).

**8.** Method according to Claim 7, in which the step of providing values of base and eyeglass index is carried out by providing the semifinished eyeglass the aspherical surface of which is unknown.

**9.** Method according to one of Claims 1 to 8, in which the optical targets of the target model lens ($L_C$) are chosen from power, astigmatism, resulting astigmatism, prismatic deviation and distortion targets or a combination thereof.

**10.** Method according to one of Claims 1 to 9, in which the ophthalmic lens is a progressive lens, the reference point being the far-vision fitting point.

**11.** Method according to any one of the preceding claims, in which the generic surface ($S_G$) chosen has the same addition as the progressive semifinished eyeglass.

**12.** Method according to any one of the preceding claims, in which the generic surface ($S_G$) chosen has the same progression length as the progressive semifinished eyeglass.

Fig. 1

Fig. 2

```
┌─────────────────────┐
│  fourniture d'un    │
│  verre semi-fini    │         100
└─────────────────────┘
┌ ─ ─ ─ ─ ─ ─ ─ ─ ─ ─ ─ ─ ┐
│ ┌─────────────────────┐ │
│ │ détermination de la │ │
│ │ nappe d'asphérisation│ │    120
│ └─────────────────────┘ │
│        ╭───────╮        │
│        │   N   │        │      130
│        ╰───────╯        │
│ ┌─────────────────────┐ │
│ │ Lentille S₅ = N +T  │ │
│ └─────────────────────┘ │    140
└ ─ ─ ─ ─ ─ ─ ─ ─ ─ ─ ─ ─ ┘
                                110
```

Fig. 3

Carte de sphère – surface avant du verre semi-fini – exemple 1

Fig. 4

Carte de cylindre – surface avant du verre semi-fini – exemple 1
Fig.5

Carte de sphère – surface générique – exemple 1
Fig.6

Carte de cylindre – surface générique – exemple 1
Fig.7

Carte de sphère – nappe d'asphérisation – exemple 1
Fig.8

Carte de cylindre – nappe d'asphérisation – exemple 1
Fig.9

Défauts de puissance et d'astigmatisme le long de la méridienne – lentille obtenue selon le procédé de l'invention – exemple 1
Fig.10

Carte du défaut de puissance - lentille obtenue selon le procédé de l'invention – exemple 1
Fig.11

Carte du défaut d'astigmatisme - lentille obtenue selon le procédé de l'invention – exemple 1
Fig.12

Défauts de puissance et d'astigmatisme le long de la méridienne – lentille de l'art antérieur –
exemple 1
Fig.13

Carte du défaut de puissance - lentille de l'art antérieur – exemple 1
Fig.14

Carte du défaut d'astigmatisme - lentille de l'art antérieur – exemple 1

Fig.15

Carte de sphère – surface avant du verre semi-fini – exemple 2

Fig.16

Carte de cylindre – surface avant du verre semi-fini – exemple 2
Fig.17

Carte de sphère – surface générique – exemple 2
Fig.18

Carte de cylindre – surface générique – exemple 2
Fig.19

Carte de sphère – nappe d'asphérisation – exemple 2
Fig.20

Carte de cylindre – nappe d'asphérisation – exemple 2
Fig.21

Défauts de puissance et d'astigmatisme le long de la méridienne – lentille obtenue selon le procédé de l'invention – exemple 2
Fig.22

Carte du défaut de puissance - lentille obtenue selon le procédé de l'invention – exemple 2
Fig.23

Carte du défaut d'astigmatisme - lentille obtenue selon le procédé de l'invention – exemple 2
Fig.24

Défauts de puissance et d'astigmatisme le long de la méridienne – lentille de l'art antérieur –
exemple 2
Fig.25

Carte du défaut de puissance - lentille de l'art antérieur – exemple 2
Fig.26

Carte du défaut d'astigmatisme - lentille de l'art antérieur – exemple 2
Fig.27

Carte de sphère – surface avant du verre semi-fini – exemple 3
Fig.28

Carte de cylindre – surface avant du verre semi-fini – exemple 3
Fig.29

Carte de sphère – surface générique – exemple 3
Fig.30

Carte de cylindre – surface générique – exemple 3
Fig.31

Carte de sphère – nappe d'asphérisation – exemple 3
Fig.32

Carte de cylindre – nappe d'asphérisation – exemple 3
Fig.33

Défauts de puissance et d'astigmatisme le long de la méridienne – lentille obtenue selon le procédé de l'invention – exemple 3
Fig.34

Carte du défaut de puissance - lentille obtenue selon le procédé de l'invention – exemple 3
Fig.35

Carte du défaut d'astigmatisme - lentille obtenue selon le procédé de l'invention – exemple 3
Fig.36

Défauts de puissance et d'astigmatisme le long de la méridienne – lentille de l'art antérieur – exemple 3

Fig.37

Carte du défaut de puissance - lentille de l'art antérieur – exemple 3

Fig.38

Carte du défaut d'astigmatisme - lentille de l'art antérieur – exemple 3
Fig.39

Carte de sphère – surface avant du verre semi-fini – exemple 4
Fig.40

X en MM

Carte de cylindre – surface avant du verre semi-fini – exemple 4
Fig.41

X en MM

Carte de sphère – surface générique – exemple 4
Fig.42

Carte de cylindre – surface générique – exemple 4
Fig.43

Carte de sphère – nappe d'asphérisation – exemple 4
Fig.44

Carte de cylindre – nappe d'asphérisation – exemple 4
Fig.45

Défauts de puissance et d'astigmatisme le long de la méridienne – lentille obtenue selon le
procédé de l'invention – exemple 4
Fig.46

BETA (Tabo) EN DEGRE

Carte du défaut de puissance - lentille obtenue selon le procédé de l'invention – exemple 4

Fig.47

BETA (Tabo) EN DEGRE

Carte du défaut d'astigmatisme - lentille obtenue selon le procédé de l'invention – exemple 4

Fig.48

T. S. P (Dioptrie)

Défauts de puissance et d'astigmatisme le long de la méridienne – lentille de l'art antérieur –
exemple 4
Fig.49

BETA (Tabo) EN DEGRE

ALPHA EN DEGRE

Carte du défaut de puissance - lentille de l'art antérieur – exemple 4
Fig.50

Carte du défaut d'astigmatisme - lentille de l'art antérieur – exemple 4
Fig.51

Carte de sphère – surface avant du verre semi-fini – exemple 5
Fig.52

Carte de cylindre – surface avant du verre semi-fini – exemple 5
Fig.53

Carte de sphère – surface générique – exemple 5
Fig.54

48

Carte de cylindre – surface générique – exemple 5
Fig.55

Carte de sphère – nappe d'asphérisation – exemple 5
Fig.56

Carte de cylindre – nappe d'asphérisation – exemple 5
Fig.57

Défauts de puissance et d'astigmatisme le long de la méridienne – lentille obtenue selon le procédé de l'invention – exemple 5
Fig.58

Carte du défaut de puissance - lentille obtenue selon le procédé de l'invention – exemple 5
Fig.59

Carte du défaut d'astigmatisme - lentille obtenue selon le procédé de l'invention – exemple 5
Fig.60

Défauts de puissance et d'astigmatisme le long de la méridienne – lentille de l'art antérieur –
exemple 5
Fig.61

Carte du défaut de puissance - lentille de l'art antérieur – exemple 5
Fig.62

Carte du défaut d'astigmatisme - lentille de l'art antérieur – exemple 5
Fig.63

Carte de sphère – surface avant du verre semi-fini – exemple 6
Fig.64

Carte de cylindre – surface avant du verre semi-fini – exemple 6
Fig.65

Carte de sphère – surface générique – exemple 6
Fig.66

54

Carte de cylindre – surface générique – exemple 6
Fig.67

Carte de sphère – nappe d'asphérisation – exemple 6
Fig.68

Carte de cylindre – nappe d'asphérisation – exemple 6
Fig.69

Défauts de puissance et d'astigmatisme le long de la méridienne – lentille obtenue selon le procédé de l'invention – exemple 6
Fig.70

Carte du défaut de puissance - lentille obtenue selon le procédé de l'invention – exemple 6

Fig.71

Carte du défaut d'astigmatisme - lentille obtenue selon le procédé de l'invention – exemple 6

Fig.72

Défauts de puissance et d'astigmatisme le long de la méridienne – lentille de l'art antérieur –
exemple 6
Fig.73

Carte du défaut de puissance - lentille de l'art antérieur – exemple 6
Fig.74

Carte du défaut d'astigmatisme - lentille de l'art antérieur – exemple 6
Fig.75

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- WO 2005019905 A
- EP 1688781 A
- WO 9812590 A
- EP 0990939 A
- WO 2007017766 A
- FR 2753805 A
- US 6318859 A

**Littérature non-brevet citée dans la description**

- Ray tracing through progressive ophthalmic lenses, 1990 International Lens Design Conference. **B. BOURDONCLE.** Proc. Soc. Photo. Opt. Instrum. Eng. 1990